# EUROPÄISCHE PATENTSCHRIFT

(11) **EP 3 420 222 B1**
(45) Veröffentlichungstag und Bekanntmachung des Hinweises auf die Patenterteilung: **24.05.2023**
(21) Anmeldenummer: 17706786.5
(22) Anmeldetag: 23.02.2017
(51) Int. Cl.: F03D 7/02, F03D 7/04

(54) **VERFAHREN UND WINDPARKREGELUNGSMODUL ZUM REGELN EINES WINDPARKS**
METHOD AND WINDFARM CONTROL MODULE FOR CONTROLLING A WINDFARM
PROCÉDÉ ET MODULE DE RÉGULATION DE PARC ÉOLIEN POUR LA RÉGULATION D'UN PARC ÉOLIEN

(30) Priorität: 23.02.2016 DE 102016103101
(43) Veröffentlichungstag der Anmeldung: 02.01.2019
(73) Patentinhaber: Wobben Properties GmbH, 26607 Aurich (DE)
(72) Erfinder: BUSKER, Kai, 26629 Großefehn (DE)
(74) Vertreter: Eisenführ Speiser
(86) Internationale Anmeldenummer: PCT/EP2017/054147
(87) Internationale Veröffentlichungsnummer: WO 2017/144576

(56) Entgegenhaltungen:
- EP-A1- 2 654 165
- EP-A1- 2 672 114
- WO-A2-2009/056156
- WO-A2-2009/076968
- WO-A2-2012/028150
- DE-A1-102010 007 136
- DE-A1-102012 221 498
- DE-A1-102013 207 255
- DE-A1-102013 207 264
- US-A1- 2007 183 885
- US-B1- 7 168 251

## Beschreibung

Die vorliegende Erfindung betrifft ein Verfahren zum Regeln eines mehrere Windenergieanlagen aufweisenden Windparks. Außerdem betrifft die vorliegende Erfindung ein Windparkregelungsmodul zum Ausführen eines solchen Verfahrens. Die Erfindung betrifft ferner einen Windpark, der mit einem solchen Verfahren und/oder mit einem solchen Windparkregelungsmodul geregelt wird. Außerdem betrifft die vorliegende Erfindung eine Windparksteuerungseinrichtung, die ein genanntes Windparkregelungsmodul umfasst. Die Erfindung betrifft auch eine Windenergieanlage.

Windparks sind bekannt und sie beinhalten mehrere Windenergieanlagen, die über einen gemeinsamen Netzanschlusspunkt in ein elektrisches Versorgungsnetz einspeisen. Ein Windpark kann dabei zusätzlich weitere Vorrichtungen wie einen Batteriespeicher oder andere Speichervorrichtungen zum Zwischenspeichern von Energie beinhalten, als auch sog. STATCOM-Anlagen, die eine statische Blindleistungskompensation vornehmen können.

Ein solcher Windpark dient regelmäßig nicht nur dazu, elektrische Leistung in das elektrische Versorgungsnetz einzuspeisen, sondern kann auch zu einer Netzstützung oder zumindest Verbesserung der Netzqualität beitragen. Hierzu gehört, in Abhängigkeit von Netzeigenschaften, also Eigenschaften des elektrischen Versorgungsnetzes, oder dem Netzverhalten, also dem Verhalten des elektrischen Versorgungsnetzes gezielt Wirkleistung und/oder Blindleistung einzuspeisen oder auch gezielt eine solche Einspeisung zu reduzieren.

Eine solche netzabhängige Blindleistungs- und/oder Wirkleistungseinspeisung kann durch jede Windenergieanlage selbsttätig nach vorgegebenen Kriterien durchgeführt werden. Zur effektiven Nutzung eines Windparks kann es auch vorteilhaft sein, eine solche Wirk- und Blindleistungseinspeisung des Windparks zentral zu steuern bzw. zu regeln. Dadurch kann besonders die Stärke eines viele Windenergieanlagen aufweisenden Windparks gegenüber einer einzelnen Windenergieanlage gezielt ausgenutzt werden. Besonders kann dadurch der Gesamtausgang des Windparks besser kontrolliert werden und damit eine gewisse Stetigkeit erreicht werden.

Dennoch bleiben die Windenergieanlagen für eine solche Regelung die Stellglieder bzw. bilden in ihrer Gesamtheit ein Stellglied. Nachfolgende Elemente, besonders eine Netzdrossel jeder Windenergieanlage, ein Transformator jeder Windenergieanlage, Verbindungsleitungen im Windpark, ggf. einschließlich Freileitungen, dort oder anderswo auftretende Kapazitäten, ggf. weitere Drosseln im Park und auch ein Hochspannungstransformator im Windpark können die Regelstrecke bilden, zu der die Windenergieanlagen das Stellglied sind. Spannung, eingespeiste Wirkleistung und eingespeiste Blindleistung können jeweils eine Regelgröße oder zusammen mehrere Regelgrößen am Netzanschlusspunkt bilden.

Die angesprochene Regelung arbeitet somit grundsätzlich so, dass ein Regelungsmodul, das auch als Parkregler bezeichnet werden kann, Stellgrößen an die Windenergieanlagen gibt und diese, im Sinne eines gemeinsamen Stellglieds, entsprechende Wirk- und Blindleistung abgeben. Diese Wirk- und Blindleistung wird über die genannte Regelstrecke letztlich zum Netzanschlusspunkt geführt. Am Netzanschlusspunkt gemessene Netzspannung, eingespeiste Wirkleistung und eingespeiste Blindleistung können somit Rückführungsgrößen bilden und mit entsprechenden Sollwerten verglichen werden. Daraus kann ein Regelfehler oder mehrere Regelfehler gebildet werden und den Eingang des Reglers bzw. Parkreglers bilden.

Zu beachten ist, dass auf die Windenergieanlagen als Störgröße im regelungstechnischen Sinne besonders der Wind bzw. die Schwankung seiner Eigenschaften wirkt. Das betrifft besonders eine Änderung der Windgeschwindigkeit, der Windrichtung und der Böigkeit. Auch die Regelstrecke ist Einflussgrößen unterworfen bzw. kann ihr Übertragungsverhalten ändern. Hier sind besonders Spannungsänderungen zu nennen, als auch mögliche Verbraucher, die zugeschaltet werden können, wie bspw. Batteriespeicher, die geladen werden. Auch kommen Variationen der Übertragungseigenschaften und der Leitungen in Betracht. Diese können bspw. durch Wartungsarbeiten bedingt sein, oder durch andere Umschaltungen in dem internen Parknetz.

Solche Störgrößen als auch Änderungen der Regelstrecke können regelmäßig durch einen geeigneten Regler ausgeregelt werden. Besonders kann ein sog. PI-Regler durch seinen P-Anteil schnell auf Änderungen reagieren und gleichzeitig durch seinen I-Anteil häufig auch bei auftretenden Änderungen stationäre Genauigkeit herstellen.

Weiter problematisch kann auch sein, wenn einzelne Windenergieanlagen nicht wie gewohnt arbeiten. Hier kommt besonders in Betracht, dass eine Windenergieanlage ausfällt. Dadurch verändert sich dann das Stellglied, weil es bspw. mit einer Windenergieanlage weniger die von dem Regelungsmodul, also dem Parkregler, vorgegebene Sollgröße nicht mehr in der zugrundegelegten Dynamik umsetzen kann. Es kommen aber auch andere Einflussgrößen in Betracht, bspw. dass eine Windenergieanlage partiell aufgrund einer aufgetretenen hohen Temperatur reduziert betrieben werden muss, oder dass eine Beschränkung zur Einhaltung eines Schallpegels zu einer Reduzierung führt. Dabei kann eine solche Reduzierung auch bedeuten, dass die Windenergieanlage aktuell in ihrer Leistung reduziert wird, als auch dass sie in ihrer Leistung zwar nicht reduziert wird, weil sie bereits unter einer solchen Reduzierung liegt, aber in ihrer Leistungsabgabe nach oben begrenzt ist.

All solche Probleme können dann zusätzlich die Regelungsdynamik, die für den verwendeten Regler zugrundegelegt wurde, beeinflussen. Mitunter kann eine solche Beeinflussung signifikant sein.

Das Deutsche Patent- und Markenamt hat in der Prioritätsanmeldung zu vorliegender Anmeldung folgenden Stand der Technik recherchiert: DE 10 2006 014 121 A1, DE 10 2013 207 255 A1 und DE 10 2013 207 264 A1.

Die internationale Recherchenbehörde hat den folgenden relevanten Stand der Technik recherchiert, nämlich die Dokumente WO 2009/076968 A2 und DE 10 2013 207 255 A1. Das Dokument WO 2009/076968 A2 betrifft ein ereignisgesteuertes Steuersystem zum Steuern von Windenergieanlagen, insbesondere in einem Windpark, bei dem Regler im laufenden Betrieb in Abhängigkeit von Ereignisdaten angepasst werden. Das Dokument DE 10 2013 207 255 A1 betrifft ein Verfahren zum Einspeisen elektrischer Leistung in ein Versorgungsnetz mittels wenigstens einer Windenergieanlage, bei dem Regler im laufenden Betrieb in Abhängigkeit des elektrischen Versorgungsnetzes gewechselt werden. Weitere Beispiele aus dem Stand der Technik werden in DE 10 2013 207264 A1 und EP 2 654 165 A1 offenbart.

Der vorliegenden Erfindung liegt somit die Aufgabe zugrunde, zumindest eines der o.g.

Probleme zu adressieren. Insbesondere soll eine Lösung vorgeschlagen werden, die Änderungen der Windenergieanlagen als Stellglied berücksichtigen. Zumindest soll gegenüber bisher bekannten Lösungen eine alternative Lösung vorgeschlagen werden.

Erfindungsgemäß wird ein Verfahren zum Regeln eines mehrere Windenergieanlagen aufweisenden Windparks gemäß Anspruch 1 vorgeschlagen. Dabei wird von einem Windpark ausgegangen, der an einem Netzanschlusspunkt in ein elektrisches Versorgungsnetz einspeist.

Das Verfahren läuft so ab, dass wenigstens ein Regelfehler an einem Regelfehlereingang eines Windparkregelungsmoduls eingegeben wird. Ein solches Windparkregelungsmodul weist wenigstens einen Regler auf und im einfachsten Fall wird der Regelfehler an den Eingang des Reglers eingegeben. Es können auch mehrere Regelfehler, nämlich jeweils einer zu unterschiedlichen Führungsgrößen eingegeben werden, wobei dann jeweils ein Regelfehler an den Eingang eines Reglers eingegeben wird. Hier wird vereinfachend von einem Eingrößenregler ausgegangen. Es kommt aber auch in Betracht, mehrere Regler zu einem Mehrgrößenregler zusammen zu fassen.

In Abhängigkeit des wenigstens einen Regelfehlers wird wenigstens eine Stellgröße erzeugt. Auch hier wird im einfachsten Fall aus einem Regelfehler eine Stellgröße erzeugt. Gehen mehrere Regelfehler ein, können auch mehrere Stellgrößen erzeugt werden. Vorzugsweise sind mehrere Eingrößenregler vorgesehen, die jeweils zu einem Regelfehler eine Stellgröße erzeugen. Die können aber auch in einem Mehrgrößenregler zusammengefasst sein.

Als Führungsgrößen, zu denen ein Regelfehler bestimmt wird, werden besonders eine vom Windpark einzuspeisende Wirkleistung und eine vom Windpark einzuspeisende Blindleistung vorgeschlagen.

Somit wird die wenigstens eine Stellgröße in Abhängigkeit des wenigstens einen Regelfehlers mittels wenigstens einem Regler erzeugt.

Als weiterer Verfahrensschritt wird vorgeschlagen, jeweils wenigstens einen Zustand des Windparks, seiner Windenergieanlagen und/oder einer Umgebungsbedingung als Parkzustand an einem Zustandseingang des Regelungsmoduls aufzunehmen. Dieser wenigstens eine Parkzustand wird also an dem Zustandseingang des Regelungsmoduls eingegeben. Dieser Parkzustand kann also einen Zustand des Windparks betreffen, wie bspw. welche Anlagen in dem Windpark vorhanden sind. Der Parkzustand kann auch einen Zustand der Windenergieanlagen des Windparks betreffen, besonders jeweils einen Zustand einer Windenergieanlage, wie bspw. ihren Betriebszustand. Das wird entsprechend als Parkzustand einer Windenergieanlage bezeichnet. Der Parkzustand kann auch eine Umgebungsbedingung, besonders eine Windbedingung im Park, besonders an einer Windenergieanlage des Windparks betreffen. Ein solcher Parkzustand wird als Parkzustand einer Umgebungsbedingung bezeichnet.

Es wird nun vorgeschlagen, wenigstens eine Eigenschaft des wenigstens einen Reglers in Abhängigkeit des wenigstens einen aufgenommenen Parkzustands zu verändern oder vorzugeben. Dazu kann eine Reglereinstelleinrichtung verwendet werden. Eine solche Reglereinstelleinrichtung kann auch als programmiertes Modul realisiert sein.

Es wird also vorgeschlagen, den Parkregler in Abhängigkeit eines Parkzustands zu verändern oder ihn überhaupt erst abhängig davon vorzugeben. Dabei sind solche Parkzustände nicht auf Zustände im klassisch regelungstechnischen Sinne beschränkt, sondern können auch Eigenschaften wie Anzahl der Windenergieanlagen im Windpark betreffen. Der Regler kann in Abhängigkeit eines solchen Parkzustands oder mehrerer solcher Parkzustände in seiner Parametrierung oder auch in seiner Struktur verändert oder vorgegeben werden.

Ein Vorgeben kommt besonders dann in Betracht, wenn der Windpark bzw. der Parkregler, der hier auch repräsentativ für mehrere Regler bestehen kann, in Betrieb genommen wird.

Das Verändern oder Vorgeben wenigstens einer Eigenschaft des wenigstens einen Reglers vor einer Inbetriebnahme bzw. bei der Inbetriebnahme durchzuführen, schafft den Vorteil, dass eine Inbetriebnahme weniger individuelle Anpassung benötigt und dadurch ggf. eine Inbetriebnahme ohne Systementwickler vorgenommen werden kann. Es kann dann möglich sein, eine Inbetriebnahme nur mit Servicepersonal durchzuführen, das sich regelmäßig ohnehin um eine Inbetriebnahme einer Windenergieanlage und besonders eines Windparks kümmern muss.

Parkzustände, die nachfolgend noch im Detail beschrieben werden, können somit bei der Erstinbetriebnahme besonders durch eine entsprechende Datenschnittstelle aufgenommen werden und davon abhängig kann der entsprechende Regler bzw. die entsprechenden Regler vorgegeben werden. Für eine Strukturvorgabe kann dazu vorgesehen sein, abhängig des einen oder der mehreren Parkzustände eine von mehreren vorbestimmten Reglerstrukturen auszuwählen. Für eine Parameterauswahl, die auch über eine Auswahl zwischen mehreren vorgeschlagenen Reglern vorgenommen werden kann, wird vorzugsweise aber die Verwendung eines Berechnungsalgorithmus vorgeschlagen. Bspw. kann für einen PI-Regler seine Zeitkonstante in Abhängigkeit der Dynamik des Stellglieds, oder der Regelstrecke, ausgewählt werden. Hier kann die Annahme gemacht werden, dass das Stellglied im Wesentlichen aus der Gesamtheit aller Windenergieanlagen gebildet wird.

Fällt nun eine Windenergieanlage aus, um ein einfaches Beispiel zu nennen, benötigt das durch diesen Ausfall der einen Windenergieanlage geänderte Stellglied möglicherweise mehr Zeit, eine gleich große Leistung bereitzustellen. An diese geänderte Dynamik, vereinfacht gesprochen also an diese verzögerte Dynamik, kann die Zeitkonstante des exemplarisch genannten PI-Reglers angepasst werden und entsprechend kleiner gewählt werden, um nur ein Beispiel zu nennen. Vorzugsweise erfolgt die Veränderung des wenigstens einen Reglers so, dass das Gesamtübertragungsverhalten der Regelschleife bestehend aus Regler, Stellglied, Strecke und Messglied möglichst gleich bleibt, zumindest möglichst eine ähnliche Dynamik vor und nach der Veränderung aufweist.

Es somit zu beachten, dass besonders auch durch die Berücksichtigung von Veränderungen der Windenergieanlagen, einschließlich ihres Ausfalls, eine Veränderung des Übertragungsverhaltens des Stellglieds berücksichtigt wird. Somit kann durch das vorgeschlagene Verfahren auch eine Veränderung des Stellglieds berücksichtigt werden. Dem liegt auch die Erkenntnis zugrunde, dass überhaupt von einer Veränderung des Stellgliedes in manchen Fällen ausgegangen werden muss.

Vorzugsweise wird als Parkzustand des Windparks die Anzahl in dem Windpark installierter Windenergieanlagen aufgenommen. Außerdem oder alternativ wird vorgeschlagen, die Nennwirkleistung jeder Windenergieanlage als Parkzustand des Windparks aufzunehmen. Eine solche Nennwirkleistung ist eine Kenngröße der Windenergieanlage. Liegt sie für jede Windenergieanlage des Windparks vor, bildet sie somit auch eine Kenngröße des Windparks. Sind nur Windenergieanlagen gleichen Typs in dem Windpark, was häufig vorkommt, ergibt sich über Anzahl der Windenergieanlagen im Windpark und Nennleistung jeder Windenergieanlage die gesamte Nennwirkleistung des Windparks.

Außerdem oder alternativ wird vorgeschlagen, die Nennblindleistung jeder Windenergieanlage als Parkzustand des Windparks aufzunehmen. Auch das kann somit eine Kenngröße für den Windpark sein. Besonders für Fragen der Netzstützung ist das Vermögen jeder Windenergieanlage und damit des Windparks, wie viel Blindleistung eingespeist werden kann, ein wichtiges Kriterium. Die Nennblindleistung ist ein Kennwert der Windenergieanlage bzw. die Summe aller Nennleistungen im Park ist eine Kenngröße des Windparks, kann regelmäßig aber auch eine Obergrenze der einspeisbaren Blindleistung darstellen.

Außerdem oder alternativ wird als Parkzustand des Windparks die Anzahl und Eigenschaften im Windpark vorhandener STATCOM-Anlagen aufgenommen. Solche STATCOM-Anlagen können eine statische Blindleistungskompensation vornehmen und können somit besonders bei einer Blindleistungseinspeisung mittels der Windenergieanlagen von Bedeutung sein, um einen Gesamtblindleistungsanteil beurteilen zu können. Sie können hier einen Beitrag leisten und damit auch für die Veränderung oder Vorgabe einer Eigenschaft des Reglers von Relevanz sein.

Außerdem oder alternativ wird vorgeschlagen, als Parkzustand des Windparks Anzahl und Eigenschaften im Windpark vorhandener Batteriespeicher aufzunehmen. Eigenschaften solcher Batteriespeicher sind besonders ihre Kapazität als Kenngröße als auch ihre aktuell gespeicherte und verfügbare Energie. Auch die Dynamik, mit der solche Batteriespeicher Leistung abgeben oder aufnehmen können, kann für die Berücksichtigung eines Regelungsverhaltens von Bedeutung sein.

Außerdem oder alternativ wird vorgeschlagen, Übertragungseigenschaften eines internen Parknetzes als Parkzustand des Windparks aufzunehmen. Hierzu gehören Eigenschaften wie der Wirkwiderstand und der Blindwiderstand von Übertragungsleitungen. Auch ein kapazitives Verhalten kommt in Betracht. Solche Übertragungseigenschaften sind insoweit Eigenschaften der Regelungsstrecke und diese werden vorteilhafterweise zur Veränderung oder Vorgabe wenigstens einer Eigenschaft wenigstens eines Reglers herangezogen.

Außerdem oder alternativ wird vorgeschlagen, Wirk- und Blindleistungszusammenhänge jeder Windenergieanlage als Parkzustand des Windparks aufzunehmen. Solche Wirk- und Blindleistungszusammenhänge, die regelmäßig auch als sog. PQ-Diagramm hinterlegt sein können, geben einen Zusammenhang zwischen einspeisbarer bzw. von einer Windenergieanlage erzeugbarer Wirkleistung und Blindleistung an. Insbesondere ist häufig die maximale Wirkleistung nicht zusammen mit der maximalen Blindleistung einspeisbar, weil hierbei die Scheinleistung und damit der einzuspeisende Strom zu groß werden könnten. Andererseits kommt es häufig vor, dass Windenergieanlagen, je nach Typ und Ausstattung, Blindleistung nicht von der Wirkleistung unabhängig einspeisen können. Insbesondere kommt es vor, dass nicht Blindleistung eingespeist werden kann, ohne auch zumindest einen Teil Wirkleistung einzuspeisen. Auch solche Zusammenhänge können für das Verändern oder Vorgeben einer Eigenschaft eines Reglers im Windpark eine Rolle spielen und somit wird ihre Berücksichtigung als eine Ausführungsform vorgeschlagen.

Gemäß einer weiteren Ausführungsform wird vorgeschlagen, dass als Parkzustand wenigstens einer Windenergieanlage die Verfügbarkeit jeder Windenergieanlage in Bezug auf den aktuell einspeisbaren Wirkstrom aufgenommen wird. Dazu kann jede Windenergieanlage einen solchen Wert an den Parkregler, besonders an das Windparkregelungsmodul übertragen. Damit gibt die Windenergieanlage zunächst an, ob sie überhaupt verfügbar ist. Ist sie nicht verfügbar, ist ihre Verfügbarkeit in Bezug auf den aktuell einstellbaren Wirkstrom somit als 0 zu beziffern. Es kommt aber auch in Betracht, dass sie verfügbar ist, aber nur einen Teil ihres maximalen Wirkstroms einspeisen kann, weil bspw. nicht ausreichend Wind vorhanden ist, oder weil aufgrund der aktuellen Uhrzeit ein reduzierter Betrieb zur Schallreduzierung vorgeschrieben ist.

Außerdem oder alternativ wird vorgeschlagen, als Parkzustand wenigstens einer Windenergieanlage die Verfügbarkeit jeder Windenergieanlag in Bezug auf ihren aktuell einspeisbaren Blindstrom aufzunehmen. Hier verhält es sich ähnlich wie bei dem aktuell einspeisbaren Wirkstrom und auf die Erklärung dazu wird hiermit verwiesen. Es kommt aber hinzu, dass der einspeisbare Blindstrom, je nach Einzelfall, mehr oder weniger unabhängig von der Windgeschwindigkeit sein kann. Andererseits kann eine Abhängigkeit zum Wirkstrom bestehen, der eine solche Verfügbarkeitsangabe beeinflussen kann. Auch dies sind Werte, die Eigenschaften des Stellglieds, das aus den Windenergieanlagen gebildet wird, beeinflusst und somit vorteilhafterweise zum Verändern oder Vorgeben der Reglereigenschaft herangezogen werden.

Außerdem oder alternativ wird vorgeschlagen, einen aktuellen Betriebszustand jeder Windenergieanlage als Parkzustand wenigstens einer Windenergieanlage aufzunehmen. Solche Betriebszustände können die aktuell eingespeiste Leistung oder die aktuell einspeisbare Leistung, die aktuell eingespeiste Blindleistung und die aktuell einspeisbare Blindleistung sein. Rein vorsorglich wird darauf hingewiesen, dass unter Leistung grundsätzlich Wirkleistung zu verstehen ist und ansonsten ausdrücklich von Blindleistung gesprochen wird.

Auch diese Betriebszustände beeinflussen die Eigenschaft des Stellglieds. Besonders aus der einspeisbaren Leistung und einspeisbaren Blindleistung können sich aktuelle Grenzen des Stellglieds ableiten lassen, die wiederum vorzugsweise bei dem Verändern oder vorgeben der Eigenschaft des Reglers berücksichtigt werden können.

Gemäß einer Ausführungsform wird vorgeschlagen, dass als Parkzustand einer Umgebungsbedingung die aktuelle Windgeschwindigkeit an wenigstens einer der Windenergieanlagen aufgenommen wird. Auch daraus lässt sich das verfügbare Potenzial besonders an Wirkleistung ablesen. Besonders auch eine Berücksichtigung von Änderungen der Windgeschwindigkeit lassen Rückschlüsse auf zu erwartende Einspeisefähigkeit des Windparks zu.

Außerdem oder alternativ wird vorgeschlagen, eine aktuelle Windrichtung an wenigstens einer der Windenergieanlagen als Parkzustand einer Umgebungsbedingung aufzunehmen. Die Windrichtung kann hierbei bspw. deswegen Einfluss auf zu erwartendes Parkverhalten haben, weil in bestimmten Windrichtungen, je nach Art des Windparks, Abschaltungen für einige Windenergieanlagen auftreten können, wodurch sich die insgesamt im Park erzeugbare Leistung reduzieren kann. Auch das wird vorzugsweise bei dem Verändern oder Vorgeben des Reglers berücksichtigt.

Außerdem oder alternativ wird vorgeschlagen, als Parkzustand einer Umgebungsbedingung die aktuelle Böigkeit des Windes an wenigstens einer Windenergieanlage aufzunehmen. Eine solche Böigkeit kann die Gleichmäßigkeit einer Wirkleistung und ggf. auch einer Blindleistungsabgabe beeinflussen. Bspw. kommt als ein Beispiel in Betracht, bei einer starken Böigkeit eher einen langsameren Regler zu verwenden, also entweder einen entsprechend langsameren Regler auszuwählen oder eine Zeitkonstante eines Reglers zu erhöhen. Dadurch kann ggf. eine gewisse Glättung erreicht werden und damit eine Entlastung der Windenergieanlagen und damit des Stellgliedes erreicht werden. Es kommt auch in Betracht und wird als eine Ausführungsform vorgeschlagen, in Abhängigkeit der Böigkeit einen Filter am Ausgang des Parkreglers einzusetzen, um die Vorgabewerte für einzuspeisende Wirkleistung und/oder Blindleistung zu filtern.

Außerdem oder alternativ wird vorgeschlagen, als Parkzustand einer Umgebungsbedingung die aktuelle Luftdichte des Windes an wenigstens einer der Windenergieanlagen aufzunehmen. Die Luftdichte des Windes kann Aussagen über den Energieinhalt des Windes zulassen, was wiederum Einfluss auf die erzeugbare Wirkleistung haben kann. Auch dies kann somit vorteilhaft in das Verändern oder Vorgeben der Reglereigenschaft einfließen.

Außerdem oder alternativ wird vorgeschlagen, als Parkzustand einer Umgebungsbedingung die aktuelle Luftfeuchtigkeit des Windes an wenigstens einer der Windenergieanlagen aufzunehmen. Auch dies beeinflusst den Energieinhalt des Windes. Die Luftfeuchtigkeit des Windes kann aber auch Hinweise geben, ob bei entsprechend niedrigen Temperaturen mit einem Eisansatz an Windenergieanlagen zu rechnen ist. Auch dies kann natürlich Einfluss auf den Regler haben und wird vorzugsweise bei dem Verändern oder Vorgeben wenigstens einer Reglereigenschaft berücksichtigt.

Außerdem oder alternativ wird vorgeschlagen, eine aktuelle Temperatur des Windes an wenigstens einer der Windenergieanlagen als Parkzustand einer Umgebungsbedingung aufzunehmen. Dies kann nun mit der eben beschriebenen Aufnahme der Luftfeuchtigkeit des Windes zusammenwirken, um einen Eisansatz zu erkennen.

Gemäß einer Ausführungsform wird vorgeschlagen, eine Parametrierung des wenigstens einen Reglers vorzugeben oder zu verändern. Hierbei kann ein vorhandener Regler, bspw. ein PI-Regler oder PID-Regler, verwendet werden und nur in seiner Parametrierung angepasst werden. Besonders kann hier eine Zeitkonstante abhängig des aufgenommenen Parkzustands angepasst werden, oder sie kann, besonders bei der Erstinstallation, vorgegeben werden.

Außerdem oder alternativ wird gemäß einer Ausführungsform vorgeschlagen, eine Struktur des wenigstens einen Reglers vorzugeben oder zu verändern. Hier fließt die Erkenntnis ein, dass Parkeigenschaften bzw. Veränderungen von Parkeigenschaften nicht nur über eine geeignete Parametrierung bzw. Anpassung der Parametrierung berücksichtigt werden können, sondern dass auch eine angepasste Struktur sinnvoll sein kann. Besonders bei einer Erstinstallation kann somit in Abhängigkeit des wenigstens einen aufgenommenen Parkzustands eine geeignete Reglerstruktur ausgewählt werden. Eine Möglichkeit der Umsetzung besteht besonders darin, für verschiedene Szenarien unterschiedliche Reglerstrukturen zur Auswahl anzubieten. Hierzu kann bspw. durch einen Entwicklungsingenieur ein Kriterienkatalog aufgestellt werden, unter welchen Bedingungen welche Strukturen, also welche Reglerart gewählt werden soll. Bspw. kommt in Betracht, dass ein Windpark mit nur wenigen Windenergieanlagen, bspw. bis zu 10 Windenergieanlagen, für die Wirkleistungsregelung einen PI-Regler verwendet, wohingegen bei mehr Windenergieanlagen ein PID-Regler zu verwenden ist, um nur ein Beispiel zu nennen. Diese beiden beispielhaft genannten Regler, nämlich der PI-Regler und der PID-Regler werden dabei ebenfalls, um bei diesem Beispiel zu bleiben, von dem Entwicklungsingenieur bereitgestellt. Die Inbetriebnahme des Windparks und damit auch des Parkreglers kann dann von Servicepersonal ohne Hinzuziehung des Entwicklungsingenieurs durchgeführt werden.

Aber auch eine Änderung der Regelungsstruktur eines bereits in Betrieb genommenen Windparks kommt in Betracht. Bspw. kann selbst das oben zur Inbetriebnahme genannte Beispiel im Betrieb des Windparks auftreten, wenn dieser bspw. nur wenig mehr Windenergieanlagen als die beispielhaft genannten 10 Windenergieanlagen aufweist. In diesem Fall wäre, um bei dem Beispiel zu bleiben, der PID-Regler zu verwenden. Fallen nun so viele Windenergieanlagen aus, dass weniger als 10 Windenergieanlagen faktisch verfügbar sind, kann auch hier ein Wechsel zu dem PI-Regler vorgenommen werden, besonders durch eine Reglereinstelleinrichtung.

Gemäß einer Ausführungsform wird vorgeschlagen, dass in Abhängigkeit eines Parkzustandes des Windparks eine Struktur des wenigstens einen Regler vorgegeben oder verändert wird. Somit wird vorgeschlagen, dass für wenigstens einen Parkzustand, der unmittelbare Eigenschaften des Windparks betrifft dazu verwendet werden, eine Struktur des Reglers vorzugeben, besonders bei Erstinbetriebnahme, oder ggf. eine vorhandene Struktur zu verändern. Zu solchen Parkzuständen kann die Anzahl der Windenergieanlagen im Windpark, Nennwerte aller Windenergieanlagen oder Art und Anzahl zusätzliche Anlagen wie STATCOM-Anlagen oder Batteriespeicher als auch Übertragungseigenschaften eines internen Parknetzes gehören. Hier wurde erkannt, dass solche grundlegenden Zustände des Windparks vorzugsweise über eine geeignete Struktur berücksichtigt werden können.

Außerdem oder alternativ wird vorgeschlagen, dass in Abhängigkeit eines Parkzustands der Windenergieanlagen eine Parametrierung des wenigstens einen Reglers vorgegeben oder verändert wird. Diese Parkzustände betreffen somit besonders konkrete und aktuelle Eigenschaften einzelner Windenergieanlagen, wie von diesem einspeisbarer Wirkstrom oder einspeisbarer Blindstrom als auch die Frage des aktuellen Betriebszustands der Windenergieanlage, wie oben erläutert wurde. Hier wurde erkannt, dass für solche Parkzustände, die Eigenschaften vorhandener Windenergieanlagen im Park betreffen, in vorteilhafter Weise lediglich eine Parametrierung des wenigstens einen Reglers anzupassen ist. Dabei wird auch berücksichtigt, dass sich solche Eigenschaften der Windenergieanlagen schneller und häufiger ändern können, als o.g. grundlegende Eigenschaften des Windparks. Somit wird gemäß dieser Ausführungsform für solche schneller und häufiger zu erwartenden Änderungen eine Strukturveränderung des Reglers vermieden. Auch können schnellere Änderungen bei der Änderung der Parameter in unterschiedlich gro-ßen Schritten oder unterschiedlich schnell vorgenommen werden und somit ist eine Anpassung an die genannten Eigenschaften der Windenergieanlagen gezielter möglich.

Außerdem oder alternativ wird vorgeschlagen, dass in Abhängigkeit eines Parkzustands einer Umgebungsbedingung eine Parametrierung und außerdem oder alternativ eine Struktur des wenigstens einen Reglers vorgegeben oder verändert wird. Hier wurde erkannt, dass den Park beeinflussende Umgebungsbedingungen durch eine Parametrierung als auch Strukturwahl des Reglers berücksichtigt werden können. Besonders für Variationen der Windgeschwindigkeit wird vorgeschlagen, nur eine Parametrierung zu verändern, die ggf. auch schneller und in kleineren Schritten nachführbar ist. Im Falle eines Eisansatzes wird hingegen eine Veränderung der Regelungsstruktur vorgeschlagen. Hierbei wurde besonders erkannt, dass ein solcher Eisansatz eine Berücksichtigung über einen strukturell geänderten Regler sinnvoll macht und dass auch die Situation eines Eisansatzes meist nur selten auftritt und keinen schnellen Wechsel unterliegt, wie dies bei einer Veränderung der Windgeschwindigkeit der Fall ist.

Vorzugsweise wird somit vorgeschlagen, dass zum Vorgeben oder Verändern einer Reglerstruktur zwischen hinterlegten Reglerstrukturen ausgewählt wird.

Gemäß einer weiteren Ausführungsform wird vorgeschlagen, dass als Regelfehler eine Abweichung zwischen Soll- und Istwert einer Netzspannung am Netzanschlusspunkt verarbeitet wird. Hier bildet somit die Netzspannung am Netzanschlusspunkt die Führungsgröße für den Regler bzw. für einen der Regler.

Außerdem oder alternativ wird als Regelfehler eine Abweichung zwischen Soll- und Istwert der am Netzanschlusspunkt eingespeisten Wirkleistung verarbeitet. Hier bildet somit die eingespeiste Wirkleistung am Netzanschlusspunkt die Führungsgröße für den Regler bzw. für einen der Regler. Somit kann hierüber die vom Windpark eingespeiste Wirkleistung geregelt werden. Die Windenergieanlagen fungieren hierbei als Stellglied und der Regler kann somit in Abhängigkeit der sich dann tatsächlich am Netzanschlusspunkt einstellenden eingespeisten Wirkleistung auf die Windenergieanlagen als Stellglied einwirken.

Außerdem oder alternativ wird vorgeschlagen, dass als Regelfehler eine Abweichung zwischen Soll- und Istwert der am Netzanschlusspunkt eingespeisten Blindleistung verarbeitet wird. In diesem Fall bildet die Blindleistung die Führungsgröße des Reglers oder eine Führungsgröße eines der Regler. Die Blindleistung kann somit ganz ähnlich wie zur Wirkleistung beschrieben darüber geregelt werden. Vorzugsweise werden alle drei genannten Führungsgrößen verwendet. Besonders bevorzugt werden zwei Regler verwendet, von denen ein Regler die eingespeiste Wirkleistung als Führungsgröße verwendet und der andere Regler die eingespeiste Blindleistung als Führungsgröße verwendet.

Erfindungsgemäß wird auch ein Windparkregelungsmodul zum Regeln eines mehrere Windenergieanlagen aufweisenden Windparks vorgeschlagen, der an einem Netzanschlusspunkt in ein elektrisches Versorgungsnetz einspeist. Dieses vorgeschlagene Windparkregelungsmodul umfasst einen Regelfehlereingang, an dem wenigstens ein Regelfehler (e) eingegeben wird, einen Stellgrößenausgang, an dem wenigstens eine Stellgröße (u) zur Übertragung an die Windenergieanlagen ausgegeben wird, wenigstens einen Regler zum Erzeugen der wenigstens einen Stellgröße in Abhängigkeit des wenigstens einen Regelfehlers, einen Zustandseingang zum Aufnehmen jeweils wenigstens eines Zustands des Windparks, seiner Windenergieanlagen und/oder einer Umgebungsbedingung als Parkzustand, und eine Reglereinstelleinrichtung zum Verändern oder Vorgeben wenigstens einer Eigenschaft des wenigstens einen Reglers in Abhängigkeit des wenigstens einen aufgenommenen Parkzustands.

Über den Regelfehlereingang kann ein Regelfehler eingebeben werden, also eine Abweichung zwischen Soll- und Istwert einer Führungsgröße, besonders einer oben bereits beschriebenen Führungsgröße. Es können auch mehrere Regelfehlereingänge vorgesehen sein bzw. an dem Regelfehlereingang mehrere unterschiedliche Regelfehler eingegeben werden.

Der vorgeschlagene Stellgrößenausgang ist dazu vorgesehen, wenigstens eine Stellgrö-ße zur Übertragung an die Windenergieanlagen auszugeben. Das Windparkregelungsmodul kann somit eine Regelung vornehmen und erzeugte Stellgrößen an die Windenergieanlagen geben, um diese als Stellglieder zu verwenden.

Außerdem weist das vorgeschlagene Windparkregelungsmodul wenigstens einen Regler zum Erzeugen einer solchen Stellgröße in Abhängigkeit des wenigstens einen Regelfehlers auf. Dieser Regler, von dem auch mehrere vorgesehen sein können, beinhaltet somit die eigentliche Regelungsvorschrift. Vorzugsweise sind mehrere Regler vorgesehen, wie bspw. ein Regler zum Regeln einer einzuspeisenden Wirkleistung und ein Regler zum Regeln einer einzuspeisenden Blindleistung.

Das vorgeschlagene Windparkregelungsmodul weist auch einen Zustandseingang auf, um jeweils wenigstens einen Zustand des Windparks, seiner Windenergieanlagen und/oder einer Umgebungsbedingung aufzunehmen. Diese Zustände werden als Parkzustände bezeichnet und zur Erläuterung wird auf vorstehend beschriebene Ausführungsformen des beschriebenen Verfahrens verwiesen, die die einzelnen Parkzustände erläutern.

Außerdem wird vorgeschlagen, dass das Windparkregelungsmodul eine Reglereinstelleinrichtung aufweist, die wenigstens eine Eigenschaft des wenigstens einen Reglers verändern oder vorgeben kann. Dieses Verändern oder Vorgeben soll in Abhängigkeit des wenigstens einen aufgenommenen Parkzustands erfolgen. Die Regeleinstelleinrichtung ist somit dazu vorbereitet, ein Verändern oder Vorgeben wenigstens einer Eigenschaft des wenigstens eines Reglers so vorzunehmen, wie gemäß wenigstens einer vorstehend beschriebenen Ausführungsform des Verfahrens erläutert wurde.

Vorzugsweise ist das vorgeschlagene Windparkregelungsmodul dazu vorbereitet, ein Verfahren nach einem der vorstehend beschriebenen Ausführungsformen eines Verfahrens auszuführen. Insbesondere kann dazu ein Prozessrechner in den Windparkregelungsmodul vorgesehen sein, auf dem ein solches Verfahren implementiert ist.

Erfindungsgemäß wird auch eine Windparksteuerungseinrichtung vorgeschlagen, die zum Steuern eines mehrere Windenergieanlagen aufweisenden an einem Netzanschlusspunkt in ein elektrisches Versorgungsnetz einspeisenden Windparks vorbereitet ist. Eine solche Windparksteuerungseinrichtung umfasst zumindest einen Messeingang zum Aufnehmen wenigstens eines Messsignals, eine Sollwerteinrichtung zum Vorgeben wenigstens eines Sollwertes, ein Windparkregelungsmodul zum Erzeugen wenigstens eines Stellwertes für die Windenergieanlagen und einen Zustandseingang zum Aufnehmen des Zustands des Windparks, seiner Windenergieanlagen und/oder einer Umgebungsbedingung als Parkzustand. Ferner weist diese Windparksteuerungseinrichtung eine Reglereinstelleinrichtung auf zum Verändern oder Vorgeben wenigstens einer Eigenschaft des Windparkregelungsmoduls.

Ein solcher Messeingang kann dabei mit einem Messsensor verbunden sein oder mit einer Einheit, die bereits ein Messsignal ausgewertet hat. Hierbei kommt auch in Betracht, Messsignale, bspw. von Windgeschwindigkeiten oder Windrichtungen, von einer Windenergieanlage zu erhalten.

Die Sollwerteinrichtung zum Vorgeben wenigstens eines Sollwertes kann insbesondere ihrerseits wenigstens einen Sollwert empfangen. Einen solchen Sollwert kann sie bspw. durch ein SCADA-System empfangen und außerdem oder alternativ von einem Betreiber des elektrischen Versorgungsnetzes. Die Sollwerteinrichtung kann dabei auch zum Verwalten oder Auswählen zwischen solchen Sollwerten dienen. Sie kann auch von anderen Eingabemitteln Sollwerte erhalten und insbesondere zwischen verschiedenen Sollwerten auswählen. Es kommt auch in Betracht, dass sie einen Sollwert oder mehrere Sollwerte modifiziert, besonders dann, wenn diese bspw. wegen schwachen Windes nicht realisiert werden können und daher reduziert werden müssten, um ein nur ein Beispiel zu nennen.

Das vorgeschlagene Windparkregelungsmodul kann wie vorstehend erläutert arbeiten und wenigstens einen Stellwert für die Windenergieanlagen erzeugen. Ein Zustandseingang ist vorgesehen zum Aufnehmen wenigstens eines Parkzustands. Dieser Zustandseingang kann auch Teil des Windparkregelungsmoduls sein.

Schließlich ist eine Reglereinstelleinrichtung vorgesehen, die abhängig von wenigstens einem aufgenommenen Parkzustand wenigstens eine Eigenschaft des Windparkregelungsmoduls verändert. Hier kommt besonders in Betracht, Eigenschaften des in dem Windparkmodul implementierten Reglers, oder eines einzigen solchen Reglers, zu verändern oder vorzugeben.

Vorzugsweise ist das Windparkregelungsmodul der Windparksteuerungseinrichtung so ausgebildet, wie gemäß wenigstens einer vorstehend beschriebenen Ausführungsform eines Windparkregelungsmoduls beschrieben wurde.

Erfindungsgemäß wird auch ein Windpark mit mehreren an einem Netzanschlusspunkt in ein elektrisches Versorgungsnetz einspeisenden Windenergieanlagen vorgeschlagen. Dieser umfasst außerdem ein Windparkregelungsmodul gemäß wenigstens einer vorstehend beschriebenen Ausführungsform oder er umfasst eine Windparksteuerungseinrichtung gemäß einer vorstehend beschriebenen Ausführungsform. Grundsätzlich kann er auch beides umfassen, wobei das Windparkregelungsmodul dann Teil der Windparksteuerungseinrichtung sein kann.

Erfindungsgemäß wird zudem eine Windenergieanlage vorgeschlagen und eine solche umfasst einen aerodynamischen Rotor, gekoppelt mit einem Generator zum Erzeugen elektrischer Leistung aus Wind, eine Wechselrichtereinheit mit einem Stromausgang zum Erzeugen elektrischen Stroms und zum Ausgeben an dem Stromausgang zum Einspeisen in ein elektrisches Versorgungsnetz, Anschlussmittel zum elektrischen Anschließen der Wechselrichtereinheit an ein internes Parknetz eines Windparks um den erzeugten elektrischen Strom über das Parknetz an einem Netzanschlusspunkt in das elektrische Versorgungsnetz einzuspeisen, und eine Kommunikationsschnittstelle zum Kommunizieren mit einem Windparkregelungsmodul oder einer Windparksteuerungseinrichtung, um Stellgrößen von dem Windparkregelungsmodul oder der Windparksteuerungseinrichtung zu empfangen und umzusetzen, wobei die Windenergieanlage ferner dazu vorbereitet ist, Zustände der Windenergieanlage über die Kommunikationseinrichtung an das Windparkregelungsmodul bzw. die Windparksteuerungseinrichtung zu übertragen, um dem Windparkregelungsmodul bzw. der Windparksteuerungseinrichtung zu ermöglichen, wenigstens eine Eigenschaft eines Reglers des Windparkregelungsmodul bzw. der Windparksteuerungseinrichtung in Abhängigkeit der übertragenen Zustände zu verändern.

Mit dem aerodynamischen Rotor wird somit über Wind der Generator angetrieben, der elektrische Leistung erzeugt bzw. mechanische Leistung in elektrische umwandelt. Die Wechselrichtereinheit erzeugt aus dieser elektrischen Leistung, die bspw. als Gleichstrom mit einer Gleichspannung bereitgestellt sein kann, elektrischen Strom, der besonders nach Frequenz, Phasenlage und der zugehörigen Spannungsamplitude zum Einspeisen in das elektrische Versorgungsnetz vorbereitet ist. Er kann aber zunächst an einem Stromausgang des Wechselrichters ausgegeben werden.

Über ein Anschlussmittel, das bspw. als Stromklemme ausgebildet sein kann, wird diese Wechselrichtereinheit an ein internes Parknetz des Windparks angeschlossen. Darin können auch Netzdrosseln und ein Transformator involviert sein. Der elektrische Strom wird dann über das Parknetz an einem Netzanschlusspunkt in das elektrische Versorgungsnetz eingespeist, nämlich zusammen mit weiteren überlagerten Strömen anderer Windenergieanlagen bzw. anderer Wechselrichtereinheiten anderer Windenergieanlagen im Windpark.

Die Kommunikationsschnittstelle ist zum Kommunizieren mit einem Windparkregelungsmodul oder einer Windparksteuerungseinrichtung vorgesehen. Es wird also eine Kommunikation mit einem Parkregler geschaffen. Darüber können Stellgrößen oder zumindest eine Stellgröße von dem Parkregler empfangen werden, z.B. ein Wirkstrom oder ein Blindstrom, der dann entsprechend von der Windenergieanlage, besonders auch der Wechselrichtereinheit umgesetzt, also erzeugt wird.

Die Windenergieanlage ist ferner dazu vorbereitet, ihre Zustände oder einen Teil ihrer Zustände über die Kommunikationseinrichtung an den Parkregler, also das Windparkregelungsmodul oder die Windparksteuerungseinrichtung zu übertragen. Der Parkregler kann abhängig davon wenigstens eine Eigenschaft eines implementierten Reglers in Abhängigkeit dieser übertragenen Zustände verändern. Insoweit wird hier durch die Ausführung eines Verfahrens gemäß wenigstens einem der vorstehend beschriebenen Ausführungsformen zum Verfahren ermöglicht bzw. umgesetzt. Insbesondere ist die Windenergieanlage dazu vorbereitet, mit einem Windparkregelungsmodul gemäß einem der vorstehend beschriebenen Ausführungsformen dazu zu kommunizieren, und außerdem oder alternativ mit einer Windparksteuerungseinrichtung gemäß einer vorstehend dazu beschriebenen Ausführungsform zu kommunizieren. Außerdem oder alternativ ist die Windenergieanlagen dazu vorbereitet, in einem gemäß einer Ausführungsform vorstehend beschriebenen Windpark betrieben zu werden.

Die Erfindung wird nun nachfolgend anhand von Ausführungsbeispielen unter Bezugnahme auf die begleitenden Figuren beispielhaft näher erläutert.
- Fig. 1: zeigt eine Windenergieanlage in einer perspektivischen Darstellung.
- Fig. 2: zeigt einen Windpark einer schematischen Darstellung.
- Fig. 3: zeigt eine Regelungsstruktur gemäß einer Ausführungsform.
- Fig. 4: zeigt in einem Diagramm eine Leistungskennlinie zur Veranschaulichung der Erfindung.
- Fig. 5: zeigt eine Regelungsstruktur gemäß einer weiteren Ausführungsform.
- Fig. 6: zeigt exemplarisch einen PI-Regler in einem Strukturbild zur Erläuterung einer möglichen Parametrierung.
- Fig. 7: zeigt ein exemplarisches Strukturbild gemäß einer Ausführungsform zur Auswahl einer Regelungsstruktur.

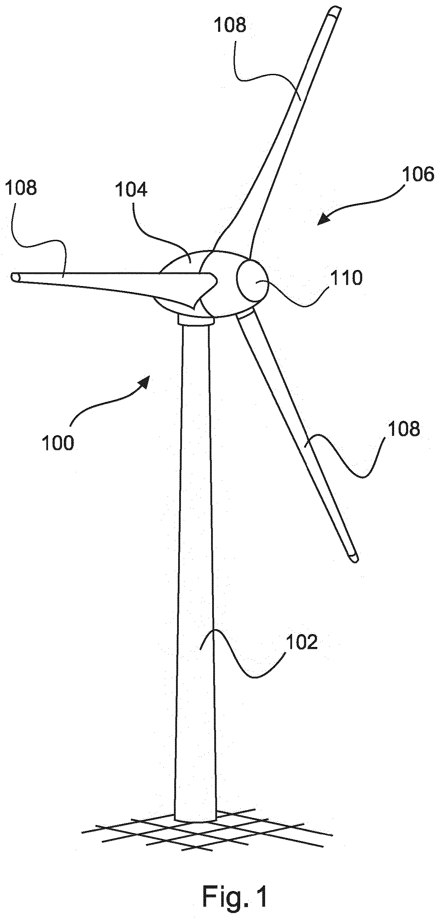

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

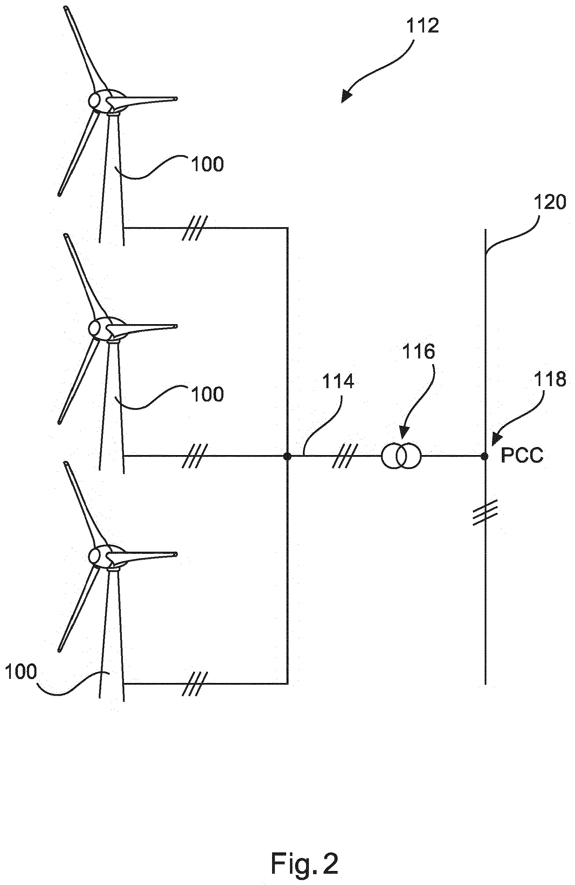

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, in dem beispielsweise auch ein Transformator am Ausgang jeder Windenergieanlage 100 vorhanden ist, um nur ein anderes Ausführungsbeispiel zu nennen.

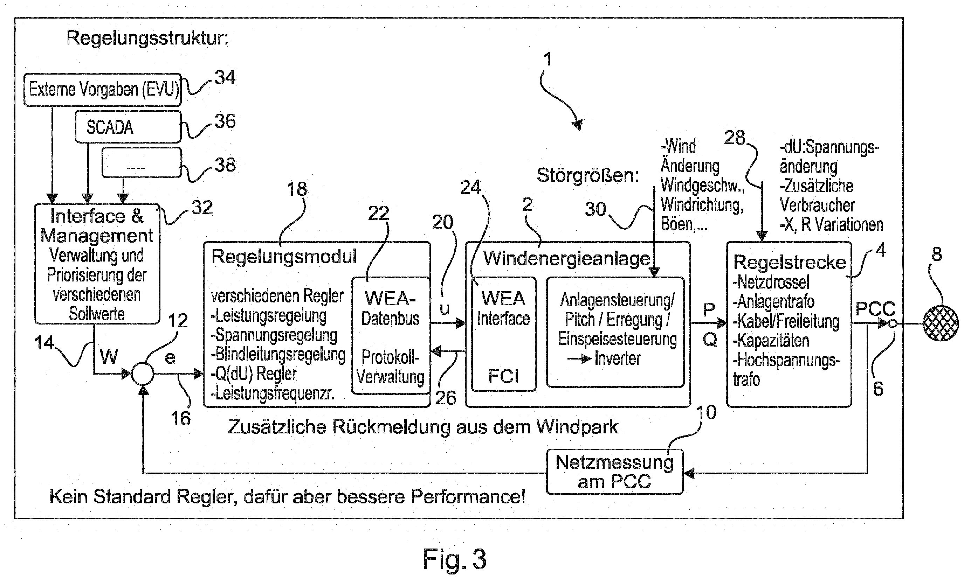

Figur 3 veranschaulicht in der Regelungsstruktur einen vorgeschlagenen Regelungsaufbau eines Windparks 1. Den Windpark 1 bilden im Wesentlichen die Windenergieanlagen 2 und ein internes Parknetz 4, das neben Übertragungsleitungen auch Netzdrosseln und Transformatoren beinhalten kann. Letztlich können aber auch die nachfolgend noch erläuterten Elemente der Regelungsstruktur als Teil des Windparks 1 angesehen werden. Schließlich ist der Parkregler auch Teil des Windparks 1.

Jedenfalls ist vorgesehen Wirk- und Blindleistung an dem Netzanschlusspunkt 6 in ein elektrisches Versorgungsnetz 8, das vereinfachend auch als Netz bezeichnet werden kann, einzuspeisen.

Messwerte an diesem Netzanschlusspunkt 6, besonders eine Spannung U, eingespeiste Wirkleistung P und eingespeiste Blindleistung Q können mit einer Messeinrichtung 10 erfasst werden. Sie können einer Vergleichsstelle 12 zugeführt werden, an der ein Soll-Ist-Wertvergleich mit einer dort eingegebenen Führungsgröße 14, die üblicherweise auch mit einem w bezeichnet wird, verglichen wird. Das Ergebnis ist der Regelfehler 16, der üblicherweise auch mit einem e bezeichnet wird. Die Führungsgröße 14 und entsprechend der Regelfehler 16 sind hier exemplarisch als eine Größe dargestellt, sie können aber auch jeweils mehrere Größen betreffen, bspw. können zwei Führungsgrößen vorgesehen sein, nämlich eine für eine einzuspeisende Wirkleistung P und eine für eine einzuspeisende Blindleistung Q.

Der Regelfehler 16 wird in ein Regelungsmodul 18 eingegeben, das wenigstens einen Regler beinhaltet. Für das Beispiel von den beiden Führungsgrößen, nämlich Wirkleistung P und Blindleistung Q können hier zwei Regler enthalten sein. Dieser Regler bzw. diese Regler erhalten dann (jeweils) den entsprechenden Regelfehler als Eingangsgröße und geben jeweils eine Stellgröße 20 aus, die auch mit dem Buchstaben u bezeichnet werden kann. Zur Ausgabe weißt das Regelungsmodul 18 ein Ausgabemodul 22 auf, das als Windenergieanlagen-Datenbusmodul ausgestaltet sein kann und mit einem Kommunikationsmodul 24 kommunizieren kann. Ein solches Kommunikationsmodul 24 kann an jeder Windenergieanlage der Windenergieanlagen 2 vorhanden sein. Dieses Kommunikationsmodul kann auch als Windenergieanlagen-Interface bezeichnet werden.

Es wird nun vorgeschlagen, dass das Regelungsmodul 18, das auch als Windparkregelungsmodul bezeichnet werden kann, wenigstens einen Parkzustand von den Windenergieanlagen 2 erhält. Dies ist in der Fig. 3 als Parksignal 26 eingezeichnet, mit dem wenigstens ein Parkzustand an das Regelungsmodul 18 zurückgegeben wird. Dieses Parksignal 26 mit wenigstens einem Parkzustand wird hier von den Windenergieanlagen 2, besonders von wenigstens einem Kommunikationsmodul 24, an das Ausgangsmodul 22 des Regelungsmoduls 18 zurückgegeben. In insoweit bildet das Ausgangsmodul 22 einen Zustandseingang des Regelungsmoduls 18. Das Kommunikationsmodul 24 kann somit nicht nur zum Aufnehmen der Stellgröße 20 arbeiten, sondern auch in die andere Richtung Daten abgeben. Ebenso gibt das Ausgangsmodul 22 nicht nur die Stellgröße bzw. mehrere Stellgrößen 20 ab, sondern kann auch einen oder mehrere Parkzustände empfangen und weiterverarbeiten.

Das Weiterverarbeiten des wenigstens einen Parkzustands erfolgt dann so, dass wenigstens ein in dem Regelungsmodul 18 enthaltener Regler in seiner Parametrierung und außerdem oder alternativ in seiner Struktur verändert wird. Diese Veränderung kann das Ausgangsmodul 22 oder ein anderer Teil des Regelungsmoduls 18 vornehmen.

Der wenigstens eine Parkzustand, der durch das Parksignal 26 zurückgegeben wird, kann zunächst einen Zustand der Windenergieanlagen 2 sein, die gemäß Fig. 3 dieses Kommunikationsmodul 24 enthalten. Es kommt aber auch in Betracht, dass die Windenergieanlagen Umgebungsbedingungen aufnehmen und über dieses Parksignal 26, oder anderweitig, an das Regelungsmodul 18 übertragen.

Die Übertragung des Parksignals 26 steht dabei auch repräsentativ für die Eingabe anderer Größen, die nicht unmittelbar von den Windenergieanlagen 2 stammen. Dazu kann beispielsweise gehören, ob und wie viele STATCOM-Anlagen in dem Windpark vorhanden sind. Insoweit steht auch dieses Kommunikationsmodul 24 repräsentativ für viele Kommunikationsmodule. Insbesondere kann jede Windenergieanlage 2 ein eigenes Kommunikationsmodul 24 aufweisen. In diesem Sinne können auch andere Elemente im Windpark, wie die genannte STATCOM-Anlage oder auch ein Batteriespeicher, ein solches Kommunikationsmodul aufweisen.

Auch kann durch das Ausgabemodul 22, das dieses Parksignal bzw. viele Parksignale 26 erhält, selbst eine erste Auswertung vornehmen. Beispielsweise kommt in Betracht, dass alle Elemente im Park, also insbesondere alle Windenergieanlagen und auch die anderen Zusatzgeräte wie STATCOM-Anlage oder Batteriespeicher inhaltliche Informationen über das repräsentativ dargestellte Parksignal 26 an das Regelungsmodul 18 übertragen. Aus der Tatsache, dass diese Anlagen solche Informationen übertragen, kann das Ausgabemodul 22 auch erkennen, wie viele und welche Elemente, also welche Geräte solche Daten übertragen. Entsprechend kann das Ausgabemodul 22 dadurch auch die Anzahl der betreffenden Geräte, Elemente oder Anlagen im Park bestimmen und entsprechend weiterverarbeiten bzw. innerhalb des Regelungsmoduls 18 weitergeben.

Insoweit kommt auch in Betracht, dass die Regelstrecke 4, die besonders Eigenschaften des internen Parknetzes betrifft, ebenfalls Informationen im Sinne des Parksignals 26 an das Regelungsmodul übergibt. Dazu können beispielsweise Messeinheiten in oder an dem internen Parknetz vorgesehen sein, die ein Kommunikationsmodul 24 aufweisen können.

Die Regelstrecke 4 unterliegt besonders Spannungsänderungen, Änderungen angeschlossener Verbraucher und Variationen ihrer Impedanz Z, insbesondere ihres imaginären Anteils X und ihres realen Anteils R. Solche Informationen können über das Parksignal als Parkzustand an das Regelungsmodul 18 zurückgegeben werden. Der Einfluss dieser Größen ist als Störeinfluss 28 als Einflusspfeil in die Regelstrecke 4 gekennzeichnet.

Störgrößen 30, die auf die Windenergieanlagen 2 wirken, sind ebenfalls über einen solchen Einflusspfeil gekennzeichnet. Durch die vorgeschlagene Anpassung des wenigstens einen Reglers im Regelungsmodul 18 durch die Rückführung wenigstens eines Parkzustandes über das Parksignal 26 kann somit auch die Berücksichtigung solcher Störgrößen 30 auf die Windenergieanlagen als auch Störeinflüsse 28 auf die Regelstrecke berücksichtigt werden. Die Störgrößen 30 auf die Windenergieanlagen sind in erster Linie der Wind, besonders Änderungen der Windgeschwindigkeit, der Windrichtung oder das unterschiedliche Auftreten von Böen.

Ferner weist die Regelungsstruktur der Fig. 3 eine Sollwerteinrichtung 32 auf. Diese Sollwerteinrichtung kann die Führungsgröße 14 vorgeben. Dazu kann sie verschiedene von extern eingegebene Vorgaben auswerten, daraus auswählen und/oder eine Priorisierung vornehmen. Dazu können externe Vorgaben 34 besonders durch einen Betreiber des elektrischen Versorgungsnetzes 8 vorgegeben und entsprechend in die Sollwerteinrichtung 32 eingegeben werden. Es kommt aber auch eine Eingabe, besonders durch Servicepersonal, über ein SCADA-System 36 in Betracht. Auch weitere Möglichkeiten einer externen Eingabe sind denkbar, die hier mit dem Block 38 angedeutet sind.

Somit kann die Regelung des Regelungsmoduls 18, besonders der darin enthaltenen Regler für die Regelung der Wirkleistung P und der Blindleistung Q zunächst auf einfache Art und Weise und damit auch auf zuverlässige Art und Weise initialisiert werden bzw. in Betrieb genommen werden. Dazu brauchen nur die Signale ausgewertet zu werden, die als Parksignal 26 in das Ausgabemodul 22 eingegeben werden. Darüber hinaus kann hierüber auch die Regelung an sich ändernde Bedingungen im Park angepasst werden.

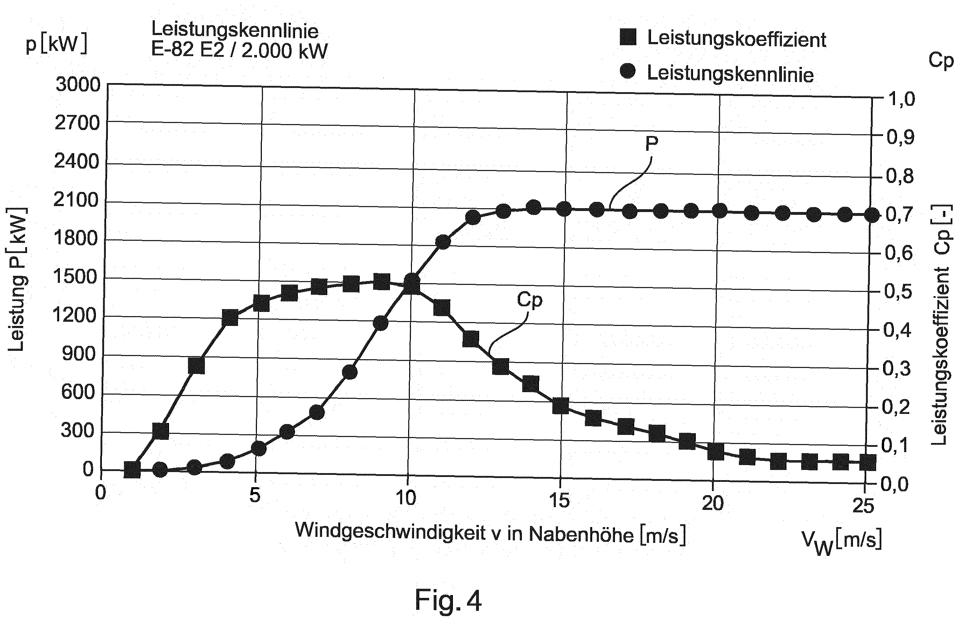

Figur 4 zeigt in einem Diagramm eine Leistungskennlinie P zur weiteren Veranschaulichung der Erfindung. Hier ist die Leistung P und auch ein Leistungskoeffizient C_{P} über die Windgeschwindigkeit V_{W} abgetragen. Die Fig. 4 kann besonders verdeutlichen, dass je nach vorherrschender Windgeschwindigkeit V_{W} unterschiedlich viel Leistung erzeugt werden kann. Das bedeutet aber auch, dass die betreffende Windenergieanlage unterschiedlich dynamisch auf Änderungen reagieren kann.

Somit besteht ein weiterer Aspekt der zugrunde liegenden Erfindung darin, einen Wirkleistungsregler für einen Windpark insoweit zu verbessern, als dass ein statischer Regler durch einen adaptiven Regler ersetzt wird. Dieser adaptive Regler erkennt unterschiedliche Arbeitspunkte des Windparks oder anderer Komponenten im Windpark und passt sich den Gegebenheiten an. Dabei kann er seine Struktur behalten und durch Parameter anpassen, oder es wird sogar in Abhängigkeit des Arbeitspunktes der Reglertyp bzw. die Regelungsstruktur verändert, beispielsweise von einem PID- zu einem PI-Regler. Es kommt auch in Betracht, dass ein zusätzliches Filtermodul für eine Reglerabweichung zugeschaltet wird.

Eine Überlegung ist hierbei, dass eine Leistungsabgabe bzw. die Dynamik einer Leistungsbereitstellung der Windenergieanlage vom Wind abhängig ist. Anhand der Leistungskurve P der Fig. 4 ist zu erkennen, dass die maximale Leistung der Windenergieanlage von der Windgeschwindigkeit abhängt.

An dieser Kurve kann die beispielhafte Überlegung nachvollzogen werden, dass für den Fall, dass ein Arbeitspunkt bei P = 1200 kW erreicht werden soll, dies schneller erfolgen kann, wenn eine Windgeschwindigkeit von 15 m/s herrscht, als wenn nur eine Windgeschwindigkeit von 9 m/s an der Windenergieanlage verfügbar wäre. Hierbei geht es im Wesentlichen darum, den aerodynamischen Rotor möglichst schnell auf die erforderliche Drehzahl zu beschleunigen. Dies geht schneller, wenn die Windgeschwindigkeit an der Anlage größer ist als nötig.

Ist die Windsituation innerhalb des Windparks ausreichend bekannt, kann diese Information in den Regler mit einfließen und so zu einem besseren Regelverhalten führen. Genauso können auch andere Aspekte wie böige Winde erkannt werden und der Regler diese Information mit verarbeiten. Hier liegt die Erkenntnis zugrunde, dass in einem solchen Betriebsarbeitspunkt die Leistungsregelung der Windenergieanlage selbst größere Leistungsschwankungen verursacht, nämlich bedingt durch die internen Regler, besonders Drehzahl, Leistungs- und Pitchregelung. Dies würde nicht oder weniger auftreten, wenn beispielsweise ein vergleichsweise gleichbleibender Wind herrscht. Gemäß einem Vorschlag wird hierzu vorgeschlagen, die Ausgangsgröße des Windparkreglers zu glätten, damit nicht noch zusätzliche Anregungen vom Windparkregler auf die Leistungsregelung der Windenergieanlage treffen. Insoweit kann also eine Realisierung über einen Filter als ergänzendes Element vorgesehen sein. Ein solcher Filter kann insoweit eine Ergänzung oder Veränderung des Reglers darstellen.

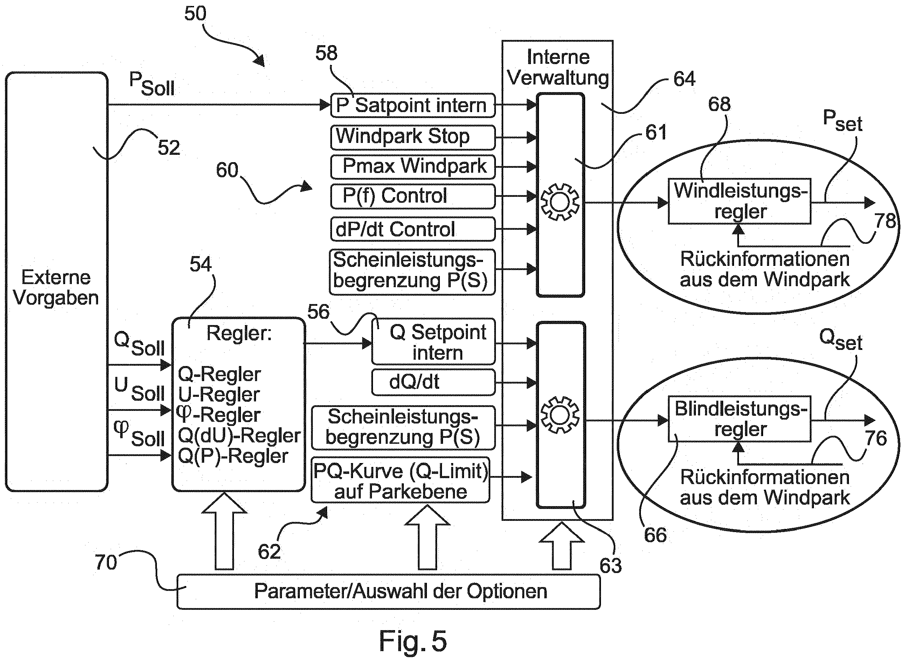

Figur 5 zeigt eine Regelungsstruktur gemäß einer weiteren Ausführungsform. In dieser Regelungsstruktur 50 werden zunächst externe Vorgaben vorgegeben, besonders die Sollwerte für Wirkleistung P_{Soll}, Blindleistung Q_{Soll}, die Spannungshöhe U_{Soll} und der Phasenwinkel Phiₛₒₗₗ(bzw. φₛₒₗₗ). Besonders die letzten vier Größen können in einen Blindleistungsvorregler 54 eingehen, der einen Q-Regler, U-Regler, Phi-Regler (bzw. φ-Regler), Q(dU)-Regler und einen Q(P)-Regler beinhalten kann.

Das Ergebnis dieses Blindleistungsvorreglers 54 kann dann in einen Blindleistungsarbeitspunktregler 56 eingegeben werden. Der Wirkleistungssollwert P_{Soll} kann auf ähnliche Art und Weise ebenfalls direkt in einen Blindleistungsarbeitspunktregler 58 einfließen. Damit wird erreicht, dass die vorgesehene Wirkleistung P_{Soll} als auch die vorgesehene Blindleistung Q_{Soll} nicht unmittelbar als Sollwert auf den Wirkleistungsregler 68 bzw. Blindleistungsregler 66 aufgeschaltet wird. Ähnlich zu den Blindleistungsarbeitspunktregler 56 und Wirkleistungsarbeitspunktregler 58 sind noch diverse andere Hilfsregler 60 vorgesehen, die verschiedene andere Größen betreffen. Dazu gehört ein mögliches Anhalten des Windparks (Windparkstop), die Berücksichtigung einer maximalen Wirkleistung (P_{Max} Windpark), eine frequenzabhängige Leistungsregelung (P(f)-Regelung), eine Regelung der Leistungsänderung (dP/dt-Regelung) sowie eine Scheinleistungsbegrenzung (Scheinleistungsbegrenzung P(S)). Diese Hilfsregler 60 betreffen letztlich die Wirkleistungsregelung. Sie wirken auf einen Wirkleistungsblock 61, der Teil eines Verwaltungsblocks 64 ist. Dieser Wirkleistungsblock 61 gibt dann einen Wirkleistungssollwert in den eigentlichen Wirkleistungsregler 68 ein. Dieser Wirkleistungsregler 68 ist insoweit ein Regler, der gemäß der Struktur der Fig. 3 in dem Regelungsmodul 18 angeordnet wäre. Der Wirkleistungsregler 68 kann somit Teil eines Windparkregelungsmoduls 18 sein. Dieser Wirkleistungsregler 68 gibt dann einen Wirkleistungsarbeitspunkt P_{Set} an die Windenergieanlagen ab.

Strukturell ähnlich sind für die Blindleistungsvorgabe auch Hilfsregler 62 vorgesehen, die eine Blindleistungsänderung nach der Zeit betreffen (dQ/dt), auch eine Scheinleistungsbegrenzung (Scheinleistungsbegrenzung P(S)) und eine Begrenzung einer PQ-Kurve auf der Parkebene (PQ-Kurve(Q-Limit) auf Parkebene). Diese Hilfsregler 62 wirken zusammen mit dem Blindleistungsarbeitspunktregler 56 auf den Blindleistungsblock 63, der ebenfalls Teil des Verwaltungsblocks 64 ist. Der Blindleistungsblock 63 gibt dann einen Sollwert unmittelbar an den Blindleistungsregler 66. Der Blindleistungsregler 66 gibt einen Blindleistungsarbeitspunkt Q_{Set} an die Windenergieanlagen aus.

Zur Verbesserung wird nun vorgeschlagen, Informationen aus dem Windpark als Parkzustände 76 und 78 an den Blindleistungsregler 66 bzw. Wirkleistungsregler 68 zurückzugeben. Diese Parkzustände 76 und 78 können auch identisch sein. Jedenfalls wird hier nun vorgeschlagen, dass der Wirkleistungsregler 68 von den Parkzuständen 78 abhängt, sich in seiner Parametrierung und/oder Struktur davon abhängig ändern kann. In gleicher Weise wird vorgeschlagen, dass der Blindleistungsregler 66 sich in Abhängigkeit der Parkzustände 76 ändern kann. Auch für ihn kommt eine Änderung in der Parametrierung als auch der Struktur in Betracht. Dadurch kann eine gute Anpassung dieser beiden Regler an die Situation im Park und besonders auch an Änderungen von Situationen im Park erreicht werden.

Darüber hinaus wird ein Parametrierungsmodul 70 vorgeschlagen, das ebenfalls Parkzustände erhält, was hier nicht eingezeichnet ist. Das Parametrierungsmodul 70 kann anhand solcher Parkzustände eigenständig eine Parametrierung, ggf. auch Strukturierung oder Auswahl von Optionen, für den Blindleistungsvorregler als auch für die Blindleistungsarbeitspunktregler 56, Wirkleistungsarbeitspunktregler 58 und die Hilfsregler 60 und 62 vornehmen. Außerdem kann eine Parametrierung, Strukturänderung oder Optionsauswahl für den Verwaltungsblock 64 vorgesehen sein. Somit kann hier auch erreicht werden, dass die Implementierung von Reglerstrukturen besonders bei der Inbetriebnahme des Parks bzw. des Parkrechners durch dieses Parametrierungsmodul 70 automatisch oder weitgehend automatisch vorgenommen werden kann. Das erleichtert nicht nur die Inbetriebnahme, sondern vermeidet auch Fehler.

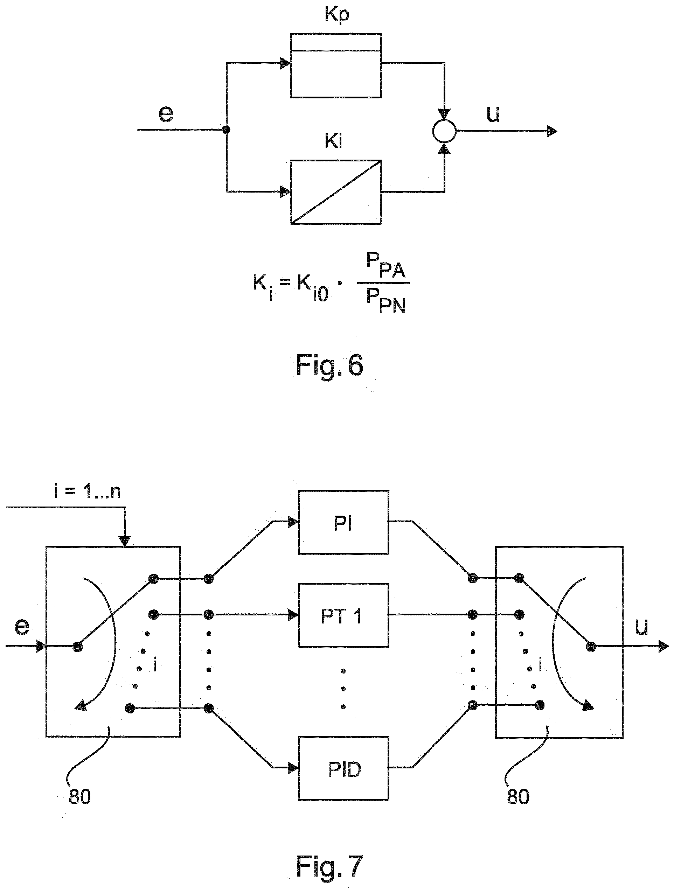

Figur 6 veranschaulicht eine Struktur eines PI-Reglers. Hier ist im Grunde bekannterma-ßen ein PI-Regler gezeigt, der durch eine Proportionalitätskonstante K_{P} und eine Integrationskonstante K_{I} beschrieben werden kann. Seinen Eingang bildet in der Regel der Fehler e und als Ausgangsgröße gibt er die Stellgröße u aus. Zur Parametrierung können solche Parameter angepasst werden. Beispielsweise kann, was nur als ein exemplarisches Beispiel zu verstehen ist, die Integrationskonstante K_{I} berechnet werden als ein Produkt aus einer nominalen Konstante oder Grundkonstanten K_{I0} mit dem Quotient verfügbarer Nennleistung des Windparks P_{PA} durch die Nennleistung des Windparks P_{PN}.

Fig. 6 zeigt insoweit ein Beispiel für eine Parameterveränderung, und Fig. 7 zeigt ein Beispiel für eine Strukturveränderung, nämlich wie diese umgesetzt werden kann. Auch diese Struktur der Fig. 7 ist zur Erläuterung vereinfachend dargestellt. Auch Fig. 7 geht von einem Regler aus, der als Eingang einen Regelfehler e erhält und eine Stellgröße u ausgibt. Als eigentlicher Regler sind hier drei Beispielblöcke vorgesehen, nämlich ein PI-Regler, der vereinfachend als PI bezeichnet ist, ein PT1-Regler, der vereinfachend als PT1 bezeichnet ist und ein PID-Regler, der vereinfachend als PID bezeichnet ist.

Von diesen drei Reglern PI, PT1 und PID ist jeweils nur einer aktiv. Dazu kann mit der Umschaltvorrichtung 80, die zwei einzelne synchronisierte Teilschaltblöcke aufweist, eine Umschaltung zwischen diesen drei beispielhaften Reglern und weiteren Reglern vorgenommen werden. Beispielsweise können diese in Abhängigkeit der Anzahl der verfügbaren Windenergieanlagen im Windpark geschaltet werden. Dafür wird beispielhaft dieser Wert der Anzahl der verfügbaren Windenergieanlagen mit der Variablen i gekennzeichnet. Diese Variable i kann Werte von 1 bis n annehmen, wobei n der maximalen Anzahl der Windenergieanlagen im Park entspricht. Theoretisch könnte i auch einen Wert 0 annehmen, nur dann wäre keine Windenergieanlage im Park aktiv und jegliche Reglerauswahl dann sinnlos.

Jedenfalls wird hier davon ausgegangen, dass die Anzahl verfügbarer Windenergieanlagen i von 1 bis n reichen kann, und hier wird vorgeschlagen, dass die Umschaltvorrichtung 80 in Abhängigkeit dieser Anzahl verfügbarer Windenergieanlagen i zwischen diesen Reglern umschaltet. Eine solche Umschaltung kann natürlich auch in einem Prozessrechner durchgeführt werden. Somit ist es also auch möglich, in Abhängigkeit von Zuständen des Windparks, in Fig. 7 an dem Beispiel der Anzahl verfügbarer Windenergieanlagen veranschaulicht, verschiedene Reglerstrukturen auszuwählen bzw. zu verändern. Die Realisierung erfolgt so, dass solche unterschiedlichen Regler zur Auswahl hinterlegt sind.

## Patentansprüche

1. Verfahren zum Regeln eines mehrere Windenergieanlagen (2) aufweisenden, an einem Netzanschlusspunkt (6) in ein elektrisches Versorgungsnetz (8) einspeisenden Windparks (1), umfassend die Schritte
- Eingeben wenigstens eines Regelfehlers (e) an einem Regelfehlereingang eines Windparkregelungsmoduls (18),
- Erzeugen wenigstens einer Stellgröße (u) in Abhängigkeit des wenigstens einen Regelfehlers (e) mittels wenigstens einem Regler (66, 68),
- Ausgeben der wenigstens einen Stellgröße (u) an einem Stellgrößenausgang zum Übertragen an die Windenergieanlagen (2),
- Aufnehmen jeweils wenigstens eines Zustands des Windparks (1), seiner Windenergieanlagen (2) und/oder einer Umgebungsbedingung als Parkzustand an einem Zustandseingang (22) des Regelungsmoduls (18),
- Verändern oder Vorgeben wenigstens einer Eigenschaft des wenigstens einen Reglers (66, 68) in Abhängigkeit des wenigstens einen aufgenommenen Parkzustands mittels einer Reglereinstelleinrichtung (80), wobei
das Verändern oder Vorgeben wenigstens einer Eigenschaft des wenigstens einen Reglers (66, 68) vor einer Inbetriebnahme durchgeführt wird.

2. Verfahren nach Anspruch 1,
**dadurch gekennzeichnet, dass**
als Parkzustand des Windparks (1) wenigstens ein Zustand aufgenommen wird aus der Liste bestehend aus den Zuständen
- Anzahl in dem Windpark (1) installierter Windenergieanlagen (2),
- Nennwirkleistung jeder Windenergieanlage (2),
- Nennblindleistung jeder Windenergieanlage (2),
- Anzahl und Eigenschaften im Windpark (1) vorhandener STATCOM-Anlagen,
- Anzahl und Eigenschaften im Windpark (1) vorhandener Batteriespeicher,
- Übertragungseigenschaften eines internen Parknetzes (4) und
- Wirk- und Blindleistungszusammenhänge (P-Q-Diagramm) jeder Windenergieanlage (2).

3. Verfahren nach einem der vorstehenden Ansprüche,
**dadurch gekennzeichnet, dass**
als Parkzustand wenigstens einer Windenergieanlage (2) wenigstens ein Zustand aufgenommen wird aus der Liste bestehend aus den Zuständen
- Verfügbarkeit jeder Windenergieanlage (2) in Bezug auf aktuell einspeisbaren Wirkstrom,
- Verfügbarkeit jeder Windenergieanlage (2) in Bezug auf aktuell einspeisbaren Blindstrom und
- aktueller Betriebszustand jeder Windenergieanlage (2) in Bezug auf wenigstens eine Information aus der Liste bestehend aus
- aktuell eingespeister Leistung (P),
- aktuell einspeisbarer Leistung (P),
- aktuell eingespeister Blindleistung (Q) und
- aktuell einspeisbarer Blindleistung (Q).

4. Verfahren nach einem der vorstehenden Ansprüche,
**dadurch gekennzeichnet, dass**
als Parkzustand einer Umgebungsbedingung wenigstens ein Zustand aufgenommen wird aus der Liste bestehend aus den Zuständen
- aktuelle Windgeschwindigkeit (Vw) an wenigstens einer der Windenergieanlagen (2),
- aktuelle Windrichtung an wenigstens einer der Windenergieanlagen (2),
- aktuelle Böigkeit des Windes an wenigstens einer der Windenergieanlagen (2),
- aktuelle Luftdichte des Windes an wenigstens einer der Windenergieanlagen (2),
- aktuelle Luftfeuchtigkeit des Windes an wenigstens einer der Windenergieanlagen (2) und
- aktuelle Temperatur des Windes an wenigstens einer der Windenergieanlagen (2).

5. Verfahren nach einem der vorstehenden Ansprüche,
**dadurch gekennzeichnet, dass**
in Abhängigkeit des wenigstens einen aufgenommenen Parkzustands
- eine Parametrierung des wenigstens einen Reglers (66, 68) vorgegeben oder verändert wird und außerdem oder alternativ
- eine Struktur des wenigstens einen Reglers (66, 68) vorgegeben oder verändert wird.

6. Verfahren nach einem der vorstehenden Ansprüche,
**dadurch gekennzeichnet, dass**
- in Abhängigkeit eines Parkzustands des Windparks (1) eine Struktur des wenigstens einen Reglers (66, 68) vorgegeben oder verändert wird und außerdem oder alternativ
- in Abhängigkeit eines Parkzustands der Windenergieanlagen (2) eine Parametrierung des wenigstens einen Reglers (66, 68) vorgegeben oder verändert wird und außerdem oder alternativ
- in Abhängigkeit eines Parkzustands einer Umgebungsbedingung eine Parametrierung und außerdem oder alternativ eine Struktur des wenigstens einen Reglers (66, 68) vorgegeben oder verändert wird.

7. Verfahren nach einem der vorstehenden Ansprüche,
**dadurch gekennzeichnet, dass**
zum Vorgeben oder Verändern einer Reglerstruktur zwischen hinterlegten Reglerstrukturen ausgewählt wird.

8. Verfahren nach einem der vorstehenden Ansprüche,
**dadurch gekennzeichnet, dass**
als Regelfehler eine Abweichung zwischen Soll- und Istwert wenigstens einer der Führungsgrößen
- Netzspannung (U) am Netzanschlusspunkt,
- am Netzanschlusspunkt eingespeister Wirkleistung (P) und/oder
- am Netzanschlusspunkt eingespeister Blindleistung (Q) verarbeitet wird.

9. Windparkregelungsmodul (18) zum Regeln eines mehrere Windenergieanlagen (2) aufweisenden, an einem Netzanschlusspunkt (6) in ein elektrisches Versorgungsnetz (8) einspeisenden Windparks (1), umfassend
- einen Regelfehlereingang, an dem wenigstens ein Regelfehler (e) eingegeben wird,
- einen Stellgrößenausgang, an dem wenigstens eine Stellgröße (u) zur Übertragung an die Windenergieanlagen (2) ausgegeben wird,
- wenigstens einen Regler (66, 68) zum Erzeugen der wenigstens einen Stellgröße (u) in Abhängigkeit des wenigstens einen Regelfehlers,
- einen Zustandseingang zum Aufnehmen jeweils wenigstens eines Zustands des Windparks (1), seiner Windenergieanlagen (2) und/oder einer Umgebungsbedingung als Parkzustand,
- eine Reglereinstelleinrichtung zum Verändern oder Vorgeben wenigstens einer Eigenschaft des wenigstens einen Reglers (66, 68) in Abhängigkeit des wenigstens einen aufgenommenen Parkzustands, wobei das Windparkregelungsmodul dazu vorbereitet ist, ein Verfahren nach einem der Ansprüche 1 bis 8 auszuführen.

10. Windparksteuerungseinrichtung, vorbereitet zum Steuern eines mehrere Windenergieanlagen (2) aufweisenden an einem Netzanschlusspunkt in ein elektrisches Versorgungsnetz einspeisenden Windparks (1), umfassend
- einen Messeingang zum Aufnehmen wenigstens eines Messsignals,
- eine Sollwerteinrichtung (32) zum Vorgeben wenigstens eines Sollwertes,
- ein Windparkregelungsmodul (18) zum Erzeugen wenigstens eines Stellwertes (u) für die Windenergieanlagen (2) und
- einen Zustandseingang (22) zum Aufnehmen eines Zustands des Windparks (1), seiner Windenergieanlagen (2) und/oder einer Umgebungsbedingung als Parkzustand, wobei
die Windparksteuerungseinrichtung eine Reglereinstelleinrichtung aufweist zum Verändern oder Vorgeben wenigstens einer Eigenschaft des Windparkregelungsmoduls in Abhängigkeit des wenigstens einen aufgenommenen Parkzustands, wobei ein Windparkreglungsmodul (18) nach Anspruch 9 verwendet wird.

11. Windpark (1) mit mehreren an einem Netzanschlusspunkt (6) in ein elektrisches Versorgungsnetz (8) einspeisenden Windenergieanlagen (2), umfassend
- ein Windparkregelungsmodul (18) nach Anspruch 9, oder
- eine Windparksteuerungseinrichtung nach Anspruch 10.

12. Windenergieanlage (2) umfassend
- einen aerodynamischen Rotor, gekoppelt mit einem Generator zum Erzeugen elektrischer Leistung aus Wind,
- eine Wechselrichtereinheit mit einem Stromausgang zum Erzeugen elektrischen Stroms und zum Ausgeben an dem Stromausgang zum Einspeisen in ein elektrisches Versorgungsnetz (8),
- Anschlussmittel zum elektrischen Anschließen der Wechselrichtereinheit an ein internes Parknetz (4) eines Windparks (1), um den erzeugten elektrischen Strom über das Parknetz an einem Netzanschlusspunkt in das elektrische Versorgungsnetz einzuspeisen, und
- eine Kommunikationsschnittstelle (24) zum Kommunizieren mit einem Windparkregelungsmodul (18) oder einer Windparksteuerungseinrichtung, um Stellgrößen von dem Windparkregelungsmodul (18) oder der Windparksteuerungseinrichtung zu empfangen und umzusetzen, wobei
- die Windenergieanlage (2) ferner dazu vorbereitet ist, Zustände der Windenergieanlage (2) über die Kommunikationseinrichtung (24) an das Windparkregelungsmodul (18) bzw. die Windparksteuerungseinrichtung zu übertragen, um dem Windparkregelungsmodul (18) bzw. der Windparksteuerungseinrichtung zu ermöglichen, wenigstens eine Eigenschaft eines Reglers (66, 68) des Windparkregelungsmoduls (18) bzw. der Windparksteuerungseinrichtung in Abhängigkeit der übertragenen Zustände zu verändern, wobei die Windenergieanlage vorbereitet ist
- zur Kommunikation mit einem Windparkregelungsmodul (18) nach Anspruch 9,
- zur Kommunikation mit einer Windparksteuerungseinrichtung nach Anspruch 10, und/oder
- zum Betreiben in einem Windpark (1) nach Anspruch 11.

## Claims

1. A method for controlling a windfarm (1) having a plurality of wind power installations (2) and feeding into an electrical supply network (8) at a network connection point (6), comprising the following steps:
- inputting at least one control error (e) at a control error input of a windfarm control module (18),
- generating at least one manipulated variable (u) depending on the at least one control error (e) by means of at least one controller (66, 68),
- outputting the at least one manipulated variable (u) at a manipulated variable output for transmitting to the wind power installations (2),
- recording in each case at least one state of the windfarm (1), the windpower installations (2) thereof and/or an ambient condition as farm state at a state input (22) of the control module (18),
- altering or predefining at least one property of the at least one controller (66, 68) depending on the at least one recorded farm state by means of a controller setting device (80), wherein the altering or predefining at least of one property of the at least one controller (66, 68) is carried out before a start-up.

2. The method as claimed in claim 1,
**characterized in that**
as farm state of the windfarm (1) at least one state is recorded from the list consisting of the states
- number of wind power installations (2) installed in the windfarm (1),
- rated active power of each wind power installation (2),
- rated reactive power of each wind power installation (2),
- number and properties of STATCOM installations present in the windfarm (1),
- number and properties of battery stores present in the windfarm (1),
- transmission properties of an internal farm network (4), and
- active and reactive power relationships (P-Q diagram) of each wind power installation (2).

3. The method as claimed in any of the preceding claims,
**characterized in that**
as farm state of at least one wind power installation (2) at least one state is recorded from the list consisting of the states
- availability of each wind power installation (2) with regard to presently feedable active current,
- availability of each wind power installation (2) with regard to presently feedable reactive current, and
- present operating state of each wind power installation (2) with regard to at least one item of information from the list consisting of
- presently fed power (P),
- presently feedable power (P),
- presently fed reactive power (Q) and
- presently feedable reactive power (Q).

4. The method as claimed in any of the preceding claims,
**characterized in that**
as farm state of an ambient condition at least one state is recorded from the list consisting of the states
- present wind speed (Vw) at at least one of the wind power installations (2),
- present wind direction at at least one of the wind power installations (2),
- present gustiness of the wind at at least one of the wind power installations (2),
- present air density of the wind at at least one of the wind power installations (2),
- present air humidity of the wind at at least one of the wind power installations (2), and
- present temperature of the wind at at least one of the wind power installations (2).

5. The method as claimed in any of the preceding claims,
**characterized in that**
depending on the at least one recorded farm state
- a parametrization of the at least one controller (66, 68) is predefined or altered and additionally or alternatively
- a structure of the at least one controller (66, 68) is predefined or altered.

6. The method as claimed in any of the preceding claims,
**characterized in that**
- depending on a farm state of the windfarm (1) a structure of the at least one controller (66, 68) is predefined or altered and additionally or alternatively
- depending on a farm state of the wind power installations (2) a parametrization of the at least one controller (66, 68) is predefined or altered and additionally or alternatively
- depending on a farm state of an ambient condition a parametrization and additionally or alternatively a structure of the at least one controller (66, 68) is predefined or altered.

7. The method as claimed in any of the preceding claims,
**characterized in that**
for predefining or altering a controller structure, a choice is made between stored controller structures.

8. The method as claimed in any of the preceding claims,
**characterized in that**
a deviation between setpoint and actual values of at least one of the reference variables
- network voltage (U) at the network connection point,
- active power (P) fed at the network connection point, and/or
- reactive power (Q) fed at the network connection point is processed as control error.

9. A windfarm control module (18) for controlling a windfarm (1) having a plurality of wind power installations (2) and feeding into an electrical supply network (8) at a network connection point (6), comprising
- a control error input, at which at least one control error (e) is input,
- a manipulated variable output, at which at least one manipulated variable (u) is output for transmission to the wind power installations (2),
- at least one controller (66, 68) for generating the at least one manipulated variable (u) depending on the at least one control error,
- a state input for recording in each case at least one state of the windfarm (1), the wind power installations (2) thereof and/or an ambient condition as farm state,
- a controller setting device for altering or predefining at least one property of the at least one controller (66, 68) depending on the at least one recorded farm state,
wherein the windfarm control module is prepared to carry out a method as claimed in any of claims 1 to 8.

10. A windfarm control device, prepared for controlling a windfarm (1) having a plurality of wind power installations (2) and feeding into an electrical supply network at a network connection point, comprising
- a measurement input for recording at least one measurement signal,
- a setpoint value device (32) for predefining at least one setpoint value,
- a windfarm control module (18) for generating at least one manipulated value (u) for the wind power installations (2), and
- a state input (22) for recording a state of the windfarm (1), the wind power installations (2) thereof and/or an ambient condition as farm state, wherein the windfarm control device has a controller setting device for altering or predefining at least one property of the windfarm control module depending on the at least one recorded farm state, wherein a windfarm control module (18) as claimed in claim 9 is used.

11. A windfarm (1) having a plurality of wind power installations (2) feeding into an electrical supply network (8) at a network connection point (6), comprising
- a windfarm control module (18) as claimed in claim 9 , or
- a windfarm control device as claimed in claim 10.

12. A wind power installation (2) comprising
- an aerodynamic rotor, coupled to a generator for generating electrical power from wind,
- an inverter unit having a current output for generating electric current and for outputting at the current output for feeding into an electrical supply network (8),
- connection means for electrically connecting the inverter unit to an internal farm network (4) of a windfarm (1) in order to feed the generated electric current into the electrical supply network at a network connection point via the farm network, and
- a communication interface (24) for communicating with a windfarm control module (18) or a windfarm control device in order to receive and implement manipulated variables from the windfarm control module (18) or the windfarm control device, wherein
- the wind power installation (2) is furthermore prepared to transmit states of the wind power installation (2) via the communication device (24) to the windfarm control module (18) or the windfarm control device in order to enable the windfarm control module (18) or the windfarm control device to alter at least one property of a controller (66, 68) of the windfarm control module (18) or of the windfarm control device depending on the transmitted states, wherein the wind power installation is prepared
- for communication with a windfarm control module (18) as claimed in claim 9,
- for communication with a windfarm control device as claimed in claim 10, and/or
- for operation in a windfarm (1) as claimed in claim 11.

## Revendications

1. Procédé de régulation d'un parc éolien (1) présentant plusieurs éoliennes (2), injectant dans un réseau d'alimentation électrique (8) sur un point de raccordement au réseau (6), comprenant les étapes
- d'entrée d'au moins une erreur de régulation (e) sur une entrée d'erreur de régulation d'un module de régulation de parc éolien (18),
- de génération d'au moins une grandeur de réglage (u) en fonction de l'au moins une erreur de régulation (e) au moyen d'au moins un régulateur (66, 68),
- d'envoi de l'au moins une grandeur de réglage (u) à une sortie de grandeur de réglage pour la transmettre aux éoliennes (2),
- de réception de respectivement au moins un état du parc éolien (1), de ses éoliennes (2) et/ou d'une condition ambiante en tant qu'état de parc sur une entrée d'état (22) du module de régulation (18),
- de modification ou de spécification d'au moins une propriété de l'au moins un régulateur (66, 68) en fonction de l'au moins un état de parc reçu au moyen d'un dispositif de réglage de régulateur (80),
dans lequel la modification ou la spécification d'au moins une propriété de l'au moins un régulateur (66, 68) est mise en œuvre avant une mise en service.

2. Procédé selon la revendication 1,
**caractérisé en ce que**
est reçu en tant qu'état de parc du parc éolien (1) au moins un état issu de la liste constitué des états
- nombre d'éoliennes (2) installées dans le parc éolien (1),
- puissance active nominale de chaque éolienne (2),
- puissance réactive nominale de chaque éolienne (2),
- nombre et propriétés des installations STATCOM présentes dans le parc éolien (1),
- nombre et propriétés des accumulateurs de batterie présents dans le parc éolien (1),
- propriétés de transmission d'un réseau de parc interne (4) et
- liens entre puissance active et puissance réactive (diagramme P-Q) de chaque éolienne (2).

3. Procédé selon l'une quelconque des revendications précédentes,
**caractérisé en ce que**
est reçu, en tant qu'état de parc d'au moins une éolienne (2), au moins un état issu de la liste constituée des états
- disponibilité de chaque éolienne (2) en ce qui concerne le courant actif pouvant être injecté à l'instant t,
- disponibilité de chaque éolienne (2) en ce qui concerne le courant réactif pouvant être injecté à l'instant t, et
- état de fonctionnement à l'instant t de chaque éolienne (2) en ce qui concerne au moins une information issue de la liste constituée de
- puissance injectée à l'instant t (P),
- puissance pouvant être injectée à l'instant t (P),
- puissance réactive injectée à l'instant t (Q) et
- puissance réactive pouvant être injectée à l'instant t (Q).

4. Procédé selon l'une quelconque des revendications précédentes,
**caractérisé en ce que**
est reçu en tant qu'état de parc d'une condition ambiante au moins un état issu de la liste constituée des états
- vitesse du vent (Vw) à l'instant t sur au moins une des éoliennes (2),
- sens du vent à l'instant t sur au moins une des éoliennes (2),
- rafales de vent à l'instant t sur au moins une des éoliennes (2),
- densité de l'air du vent à l'instant t sur au moins une des éoliennes (2),
- humidité de l'air du vent à l'instant t sur au moins une des éoliennes (2), et
- température du vent à l'instant t sur au moins une des éoliennes (2).

5. Procédé selon l'une quelconque des revendications précédentes,
**caractérisé en ce que**
en fonction de l'au moins un état de parc reçu,
- une configuration de l'au moins un régulateur (66, 68) est spécifiée ou modifiée et par ailleurs ou en variante,
- une structure de l'au moins un régulateur (66, 68) est spécifiée ou modifiée.

6. Procédé selon l'une quelconque des revendications précédentes,
**caractérisé en ce que**
- une structure de l'au moins un régulateur (66, 68) est spécifiée ou modifiée en fonction d'un état de parc du parc éolien (1), et par ailleurs ou en variante
- une configuration de l'au moins un régulateur (66, 68) est spécifiée ou modifiée en fonction d'un état de parc des éoliennes (2), et par ailleurs ou en variante
- une configuration et par ailleurs ou en variante une structure de l'au moins un régulateur (66, 68) sont spécifiées ou modifiées en fonction d'un état de parc d'une condition ambiante.

7. Procédé selon l'une quelconque des revendications précédentes,
**caractérisé en ce que**
on choisit parmi des structures de régulateur enregistrées pour spécifier ou modifier une structure de régulateur.

8. Procédé selon l'une quelconque des revendications précédentes,
**caractérisé en ce que**
est traité en tant qu'erreur de régulation un écart entre une valeur de consigne et une valeur réelle d'au moins une des grandeurs de référence
- tension de réseau (U) sur le point de raccordement au réseau,
- puissance active (P) injectée sur le point de raccordement au réseau et/ou
- puissance réactive (Q) injectée sur le point de raccordement au réseau.

9. Module de régulation de parc éolien (18) destiné à réguler un parc éolien (1) présentant plusieurs éoliennes (2), injectant dans un réseau d'alimentation électrique (8) sur un point de raccordement au réseau (6), comprenant
- une entrée d'erreur de régulation, sur laquelle au moins une erreur de régulation (e) est entrée,
- une sortie de grandeur de réglage, sur laquelle au moins une grandeur de réglage (u) est envoyée pour la transmission aux éoliennes (2),
- au moins un régulateur (66, 68) pour générer l'au moins une grandeur de réglage (u) en fonction de l'au moins une erreur de régulation,
- une entrée d'état pour recevoir respectivement au moins un état du parc éolien (1), de ses éoliennes (2) et/ou d'une condition ambiante en tant qu'état de parc,
- un dispositif de réglage de régulateur pour modifier ou spécifier au moins une propriété de l'au moins un régulateur (66, 68) en fonction de l'au moins un état de parc reçu, dans lequel le module de régulation de parc éolien est préparé pour exécuter un procédé selon l'une quelconque des revendications 1 à 8.

10. Dispositif de commande de parc éolien préparé pour commander un parc éolien (1) présentant plusieurs éoliennes (2), injectant dans un réseau d'alimentation électrique sur un point de raccordement au réseau, comprenant
- une entrée de mesure pour recevoir au moins un signal de mesure,
- un dispositif de valeur de consigne (32) pour spécifier au moins une valeur de consigne,
- un module de régulation de parc éolien (18) pour générer au moins une valeur de réglage (u) pour les éoliennes (2), et
- une entrée d'état (22) pour recevoir un état du parc éolien (1), de ses éoliennes (2) et/ou d'une condition ambiante en tant qu'état de parc, dans lequel le dispositif de commande de parc éolien présente un dispositif de réglage de régulateur pour modifier ou spécifier au moins une propriété du module de régulation de parc éolien en fonction de l'au moins un état de parc reçu, dans lequel un module de régulation de parc éolien (18) selon la revendication 9 est utilisé.

11. Parc éolien (1) avec plusieurs éoliennes (2) injectant dans un réseau d'alimentation électrique (8) sur un point de raccordement au réseau (6), comprenant
- un module de régulation de parc éolien (18) selon la revendication 9, ou
- un dispositif de commande de parc éolien selon la revendication 10.

12. Eolienne (2) comprenant
- un rotor aérodynamique couplé à un générateur pour générer une puissance électrique à partir du vent,
- une unité d'onduleur avec une sortie de courant pour générer un courant électrique et pour l'envoyer à une sortie de courant pour l'injecter dans un réseau d'alimentation électrique (8),
- des moyens de raccordement destinés au raccordement électrique de l'unité d'onduleur à un réseau de parc interne (4) d'un parc éolien (1) pour injecter le courant électrique généré par l'intermédiaire du réseau de parc sur un point de raccordement au réseau dans le réseau d'alimentation électrique, et
- une interface de communication (24) destinée à communiquer avec un module de régulation de parc éolien (18) ou un dispositif de commande de parc éolien pour recevoir et convertir des grandeurs de réglage du module de régulation de parc éolien (18) ou du dispositif de commande de parc éolien, dans lequel
- l'éolienne (2) est en outre préparée pour transmettre des états de l'éolienne (2) par l'intermédiaire du dispositif de communication (24) au module de régulation de parc éolien (18) ou au dispositif de commande de parc éolien pour permettre au module de régulation de parc éolien (18) ou au dispositif de commande de parc éolien de modifier au moins une propriété d'un régulateur (66, 68) du module de régulation de parc éolien (18) ou du dispositif de commande de parc éolien en fonction des états transmis, dans lequel l'éolienne est préparée
- pour communiquer avec un module de régulation de parc éolien (18) selon la revendication 9,
- pour communiquer avec un dispositif de commande de parc éolien selon la revendication 10, et/ou
- pour fonctionner dans un parc éolien (1) selon la revendication 11.
